# EUROPÄISCHE PATENTSCHRIFT

(11) **EP 1 476 969 B1**
(45) Veröffentlichungstag und Bekanntmachung des Hinweises auf die Patenterteilung: **20.07.2005**
(21) Anmeldenummer: 03709613.8
(22) Anmeldetag: 13.02.2003
(51) Int. Cl.: H04B 10/22, G02B 6/36

(54) **OPTISCHER DREHÜBERTRAGER MIT FREIEM INNENDURCHMESSER**
OPTICAL ROTATING TRANSMITTER HAVING A FREE INSIDE DIAMETER
DISPOSITIF DE TRANSMISSION OPTIQUE DE ROTATION A DIAMETRE INTERIEUR LIBRE

(30) Priorität: 15.02.2002 DE 10206589; 15.02.2002 DE 10206591; 01.10.2002 DE 10246141; 03.12.2002 DE 10256634
(43) Veröffentlichungstag der Anmeldung: 17.11.2004
(73) Patentinhaber: Schleifring und Apparatebau GmbH, 82256 Fürstenfeldbruck (DE)
(72) Erfinder: POISEL, Hans, 91227 Leinburg (DE); STARK, Markus, 96135 Waizendorf (DE); SCHILLING, Harry, 85072 Eichstätt (DE); RANK, Matthias, 93497 Wilmering (DE); SCHOPPEL, Günther, 91085 Weisendorf (DE)
(74) Vertreter: Lohr, Georg, Dr.
(86) Internationale Anmeldenummer: PCT/DE2003/000438
(87) Internationale Veröffentlichungsnummer: WO 2003/069392

(56) Entgegenhaltungen:
- US-A- 4 555 631
- US-A- 5 134 639
- US-A1- 2002 015 469

## Beschreibung

### Technisches Gebiet

Die Erfindung betrifft eine Vorrichtung zur Übertragung optischer Signale zwischen gegeneinander drehbaren Einheiten. Derartige Vorrichtungen werden vorzugsweise in Computertomografen eingesetzt.

### Stand der Technik

Zur Übertragung optischer Signale zwischen gegeneinander drehbaren Einheiten, insbesondere mit einem freiem Innendurchmesser sind verschiedene Vorrichtungen bekannt. Grundsätzlich besteht hierin das Problem, ein Mittel zum Transport von Licht entlang des Umfangs der Vorrichtung sowie geeignete Mittel zur ein- und Auskopplung von Licht zu gestalten. Zum Einsatz in Computertomografen müssen derartige Vorrichtungen große freie Innendurchmesser in einer Größenordnung von 1 Meter aufweisen. Die Umfangsgeschwindigkeit bei der Rotation kann in einer Größenordnung von 20 m/s liegen. Gleichzeitig sollten Datenraten mit über 1 Gigabit pro Sekunde (GBaud) möglich sein.

So offenbart die US 4,109,997 einen optischen Drehübertrager, bei dem der Transport von Licht entlang des Umfangs durch Reflexion an zwei gegenüberliegenden Flächen (101, 1) erfolgt. Zur Ein- bzw. Ausköpplung von Licht sind Lichtleiter bzw. Glasfasern vorgesehen, wobei die Bündelung bzw. Fokussierung des Lichtstrahls mittels Linsen erfolgt. Diese Vorrichtung weist allerdings eine ganze Reihe von Nachteilen auf. So ist die optische Durchgangsdämpfung aufgrund mehrfacher Reflexionen unter relativ steilen Winkeln vergleichsweise hoch. Somit werden hohe Sendeleistungen im optischen Sender benötigt. Weiterhin sind aufgrund der gegenüberliegenden verspiegelten Flächen die Fertigungskosten relativ hoch. Eine breitbandige Datenübertragung mit Periodendauern des Modulationssignals, welche wesentlich geringer als die Laufzeit des Signals um den Umfang der Vorrichtung sind, ist nicht möglich, da bei Positionen des Empfängers nahe am Sender ein Mehrwegeempfang von Signalen auftritt. So werden gleichzeitig Signale, die auf kurzem Wege vom Sender empfangen werden sowie gleichzeitig Signale, welche wenigstens einmal um den Umfang der Vorrichtung reflektiert wurden empfangen. Die Laufzeitdifferenz muss klein gegenüber der Periodendauer des Modulationssignals sein. Somit ergibt sich bei einem Innendurchmesser von ca. einem Meter eine Gesamtlaufzeit um den Umfang von ca. 10 Nanosekunden. Dadurch sind beispielsweise bei der Übertragung von digitalen Signalen Bitdauern von maximal 50 Nanosekunden, entsprechend einer maximalen Übertragungsrate von 20 MBaud realisierbar.

Eine Verbesserung des optischen Systems ist in der US 4,525,025 offenbart. So ist darin insbesondere in Fig. 10 ein besonders geeigneter Graben zur Übertragung optischer Signale dargestellt. Dieser besteht nur noch aus einem Teil und ist daher kostengünstig herstellbar. Allerdings ist auch in diese Patentschrift keine wirksame Lösung des Problems der Bandbreitenbegrenzung angegeben. Zudem ist die vorgeschlagene Einkopplung bzw. Auskopplung von Licht durch stumpfe Faserenden nur mit einem äußerst schlechten Wirkungsgrad realisierbar. Somit ist diese Vorrichtung nur für kleine Durchmesser geeignet.

Eine Verbesserung der optischen Ein- bzw. Auskopplung ist in der US 4,555,631 offenbart. Darin erfolgt die Einkopplung optischer Signale in einen verspiegelten Zylinder mittels zweier Spiegel. Zur Auskopplung ist ein zusätzliches Auskoppelelement, welches an einer festen Position im Graben angeordnet ist, vorgesehen. Allerdings ergibt sich auch hier eine hohe Dämpfung der optischen Übertragungsstrecke, da die Einkoppelspiegel insbesondere bei hohen Bewegungsgeschwindigkeiten nicht beliebig nahe an den verspiegelten Zylinder herangeführt werden können. Weiterhin ergibt sich durch die nicht vermeidbare Auffächerung des Lichtstrahls auf der planaren Spiegelfläche eine zusätzliche Verschlechterung des Wirkungsgrades. Weiterhin ist die mechanische Ausführung des Auskoppelelements besonders aufwändig, damit störanfällig und teuer. Schließlich ist auch das Problem der Bandbreitenbegrenzung nicht gelöst. So wird das Licht auf zwei Wegen in entgegengesetzten Richtungen von der Einkoppelstelle zur Auskoppelstelle geleitet und schließlich gemeinsam in einem Empfänger ausgewertet. Auch hierbei gilt die Einschränkung, dass die Periodendauer des Modulationssignals wesentlich geringer als die Laufzeit des Lichts um den Umfang der Vorrichtung sein muss.

Eine Vorrichtung mit besonders hohem optischen Wirkungsgrad ist in der US 4,934,783 beschrieben. Darin erfolgt eine Fokussierung des Strahlbündels durch ein Linsensystem. Allerdings ist dieses System sehr aufwändig, teuer in der Herstellung und nur für kleine Durchmesser geeignet. Weiterhin ist auch hier das Bandbreitenproblem nicht gelöst.

Um die Dämpfung der Übertragungsstrecke zu verringern und die übertragbare Bandbreite zu vergrößern wird in der US 6,104,849 eine Übertragung in mehreren verkürzten Segmenten vorgeschlagen. Durch die verkürzten Segmente ergibt sich eine verringerte Dämpfung. Die maximale Bandbreite ist hier umgekehrt proportional zur Länge der Segmente. Somit lässt sich mit kürzeren Segmenten eine höhere Bandbreite erzielen. Allerdings ist hierfür auch eine entsprechend höhere Anzahl optischer Sender bzw. Empfänger zur Abdeckung des vollen Kreisumfangs notwendig. Somit steigen die Systemkosten proportional zur Bandbreite.

In der DE 195 43 386 C1 ist eine Vorrichtung zur breitbandigen Signalübertragung beschrieben, welche zwar eine hohe Bandbreite ermöglicht, aber keinerlei Hinweise auf eine Übertragung mit hoher Übertragungsqualität gibt.

In der US-Patentschrift 4,962,986 wird eine alternative Vorrichtung zur Lichtkopplung beschrieben. Zur Lichtein- und Auskopplung in lichtleitende Fasern wird ein Koppelmedium mit höherem Brechungsindex als die Umgebung in direkten Kontakt mit dem Faserkern gebracht. Damit erfolgt eine Ablenkung des in der Faser transportierten Lichts in das Koppelmedium. Diese Anordnung hat den entscheidenden Nachteil, dass das Koppelmedium unmittelbar in Verbindung mit den Faserkern stehen muss. Somit ist dieses System nahezu ausschließlich für die Kopplung an vorgegebenen, festen Positionen einsetzbar. Ein solches System ist aber kaum für Anordnungen, bei denen sich Sender und Empfänger gegeneinander bewegen anwendbar, da hier das Koppelmedium mit hoher Geschwindigkeit entlang dem meist sehr dünnen und empfindlichen Faserkern gleiten muss.

In Tamir, "Integrated Optics", Springer Verlag, Berlin, 1979, Seite 87 ist eine solche Vorrichtung beschrieben. Es wird darin das zur Auskopplung dienende Prisma in einem möglichst geringen Abstand über den Faserkern positioniert. Um hier einen vernünftigen Kopplungswirkungsgrad zu erreichen, muss der Abstand zwischen dem Prisma und dem Faserkern in der Größenordnung der Lichtwellenlänge liegen. Allerdings können mit herkömmlichen hochpräzisen Lagerungen diese Genauigkeiten nur bei kleinen Abmessungen der ganzen Anordnung erreicht werden. So ist dieses System derzeit beispielsweise in Computertomografen mit einem Durchmesser von 1,5 Metern und Umfangsgeschwindigkeiten bis zu 20 m/s nicht einsetzbar.

### Darstellung der Erfindung

Der Erfindung liegt die Aufgabe zugrunde, eine relativ kostengünstige Vorrichtung zur Übertragung optischer Signale zwischen zwei gegeneinander drehbaren Einheiten derart zu gestalten, dass eine zuverlässige Übertragung mit niedriger optischer Dämpfung bei großen Durchmessern, hohen mechanischen Bewegungsgeschwindigkeiten und hohen Datenraten ermöglicht wird. Weiterhin ist die Aufgabe einer besonderen Ausgestaltung der Erfindung, die Vorrichtung derart zu gestalten, dass auch Signale zu übertragen sind, deren Periodendauern klein gegenüber der Ausbreitungsdauer des Lichtes um den Umfang der Vorrichtung sind.

Eine erfindungsgemäße Lösung dieser Aufgabe ist in den unabhängigen Patentansprüchen angegeben. Weiterbildungen der Erfindung sind Gegenstand der abhängigen Ansprüche.

Die erfindungsgemäße Vorrichtung umfasst einen Lichtleiter, welcher entlang einer Kreisbahn an einer ersten Einheit angeordnet ist. Der Einfachheit halber wird hier nur ein Lichtleiter beschrieben. Selbstverständlich können auch mehrere erfindungsgemäße Anordnungen mit jeweils einem Lichtleiter parallel geschaltet werden. Mit dem Lichtleiter verbunden ist wenigstens ein erster Lichtkoppler zu Einkopplung bzw. Auskopplung von Licht in den Lichtleiter. Mit wenigstens einem dieser ersten Lichtkoppler verbunden ist wenigstens ein optischer Sender oder Empfänger. Ob ein Sender oder Empfänger mit dem Lichtleiter verbunden werden soll wird durch die gewünschte Übertragungsrichtung bestimmt. Soll Licht vom Lichtleiter weg übertragen werden, so ist ein Sender, im anderen Falle ein Empfänger vorzusehen. Zur Informationsübertragung sind die optischen Sender selbstverständlich mit einem Modulationssignal modulierbar.

Weiterhin ist eine zweite Einheit vorgesehen, welche gegenüber der ersten Einheit drehbar gelagert ist. Es wird hier von einer relativen Bewegung der beiden Einheiten gegeneinander ausgegangen und nicht auf drehende bzw. feststehende Einheiten Bezug genommen, da dies ausschließlich eine Frage des Ortsbezugs ist. Dieser zweiten Einheit ist wenigstens ein zweiter Lichtkoppler zugeordnet, der sich mit der Drehung der zweiten Einheit gegenüber der ersten in einer vorgegebenen Bahn bezüglich des Lichtleiters bewegt. Wenigstens einer dieser zweiten Lichtkoppler ist komplementär zum ersten Lichtkoppler wahlweise mit einem optischen Sender oder Empfänger ausgerüstet.

Die Erfindung sieht vor, dass wenigstens ein zweiter Lichtkoppler eine aktive Lageregelungseinheit aufweist. Diese Lageregelungseinheit umfasst einen Aktuator zur exakten Positionierung des Lichtkopplers sowie einen Sensor zur Ermittlung der Position des Lichtkopplers in bezug auf den Lichtleiter und eine Steuereinheit zur Auswertung der Sensorsignale und der entsprechenden Ansteuerung des Aktuators. Die Lageregelung des Lichtkopplers erfolgt in wenigstens einer Achse, bevorzugt aber in zwei Achsen senkrecht zur Tangente der Drehbewegung. Damit wird wahlweise die Höhe des Lichtkopplers über dem Lichtleiter bzw. der seitliche Abstand zwischen Lichtkoppler und Lichtleiter auf einem konstanten Wert gehalten. Durch diese Lageregelung wird es erstmals möglich, Licht unter extrem flachen Winkeln, d. h. nahezu parallel zur Tangente des Lichtleiters einzukoppeln um eine quasi parallele Ausbreitung des Lichts zum Spiegelgraben in dem so genannten "whispering gallery mode" zu ermöglichen. Optional kann die Lageregelung auch eine Rotations- bzw. eine Kippachse umfassen. So hat insbesondere eine zur Tangente des Lichtleiters parallele Ausrichtung des eingekoppelten Lichtstrahls einen extrem großen Einfluss auf die Koppeldämpfung. Bereits bei geringsten Abweichungen von der Parallelität der Achsen vom Lichtleiter und Lichtkoppler kann es zu einer Unterbrechung des Signals kommen, wenn der Lichtkoppler keine Mittel zur seitlichen Reflexion aufweist. In einem solchen Fall ist eine Regelung der Parallelität besonders vorteilhaft. Eine solche Lageregelung ist gerade bei großen Durchmessern der beiden gegeneinander drehbaren Einheiten, wie sie beispielsweise bei Computertomografen realisiert werden, notwendig, um mechanische Fertigungstoleranzen sowie Toleranzen aufgrund der mechanischen Bewegung auszugleichen. Durch diese Lageregelung kann eine weitgehend konstante Streckendämpfung erreicht werden. Alternativ hierzu bzw. zusätzlich hierzu kann noch eine Regelung auf eine konstante Empfangssignalamplitude vorgesehen werden. So könnte beispielsweise mit einem ersten Regelkreis eine seitliche Positionierung auf die Mitte des Lichtleiters erfolgen. Ein zweiter Regelkreis würde dann die Höhenpositionierung entsprechend der Empfangssignalamplitude vornehmen, wobei eine zusätzliche Sicherheitsüberwachung eine Kollision zwischen Lichtkoppler und Lichtleiter vermeidet.

An Stelle eines elektrischen Aktuators, wie beispielsweise eines magnetischen oder piezoelektrischen Aktua-' tors sind auch andere Aktuatoren, beispielsweise pneumatische oder hydraulische Aktuatoren denkbar. Ebenso können Sensoren beziehungsweise Elemente des Regelkreises neben einer elektrischen Ausgestaltung auch pneumatisch oder hydraulisch ausgestaltet sein.

Eine andere Art der Erfindung sieht Mittel zur hydrostatischen oder hydrodynamischen Lagerung vor. Hierbei wird wenigstens ein zweiter Lichtkoppler mittels eines hydrostatischen oder hydrodynamischen Lagers gegenüber dem Lichtleiter in einer oder zwei Achsen positioniert.

Ein solches hydrostatischen oder hydrodynamisches Lager basiert auf einem dünnen Gasfilm oder Flüssigkeitsfilm, bevorzugt ein Luftfilm zwischen zwei planen Flächen. Der Film weist eine hohe Steifigkeit auf, so dass große Kraftänderungen zu nur geringfügigen Abstandsänderungen führen.

Im Falle eines Gasfilmes wird vorzugsweise ein inertes Gas wie beispielsweise Stickstoff oder bevorzugt ein Edelgas eingesetzt. Das filmbildende Material bzw, das Gas ist vorzugsweise transparent bzw. nicht absorbierend bei der zur optischen Übertragung verwendeten Wellenlänge. Damit verursacht ein Eindringen des Mediums in den Lichtleiter keine Übertragungsstörung. Ebenso kann das Medium gezielt in den Lichtleiter geleitet werden, beispielsweise um diesen von externen Verschmutzungen freizuhalten oder zu reinigen.

Weitere geeignete Medien sind auch Flüssigkeiten, die bei der Betriebstemperatur der Vorrichtung in einen gasförmigen Zustand übergeben. Hiermit ist gerade unter schwierigen Bedingungen gleichzeitig eine Kühlung des Systems möglich.

Bevorzugt erfolgt im Falle eines hydrostatischen Lagers die Speisung des Lagers mittels einer kleinen Pumpe oder eines Druckgasbehälters. Das Medium wird hier zwischen die beiden planen Lagerflächen gedrückt. Da bei derartige Lagern auf Grund des geringen Abstands und der hohen Oberflächengüte der Lagerflächen nur geringste Gas- bzw. Luftmengen verbraucht werden, kann eine solche Speisung mit kostengünstigen Mitteln erfolgen.

Alternativ hierzu kann im Falle eines Hydrodynamischen Lagers die Speisung mittels des durch die Bewegung der beiden Einheiten zueinander verursachten Luftstroms erfolgen. In diesem Falle erfolgt die Lagerung durch die Strömung (hydrodynamisches Paradoxon, Bernoulli-Effekt). Hierzu sind vorzugsweise Mittel zur Leitung des durch die Bewegung entstehenden Luftstroms zwischen die Lagerflächen vorgesehen. Im einfachsten Falle bestehen die Luftführungselemente aus einem einfachen Luftleitblech, welches einen Teil der Luftströmungen entsprechend umlenkt. Ebenso sind auch komplexere Ausgestaltungen denkbar, welche beispielsweise zusätzliche Filter enthalten, um den Luftstrom von größeren bzw. kleinen, aber störenden Partikeln zu befreien. Wahlweise können auch Anordnungen gewählt werden, welche beispielsweise für eine weitgehend von der Bewegungsgeschwindigkeit unabhängige Luftgeschwindigkeit sorgen. So kann die Unabhängigkeit der Luftströmungsgeschwindigkeit bei zunehmender Bewegungsgeschwindigkeit durch ein Element, welches für zunehmende Verwirbelung der Luft sorgt, erreicht werden. Ein solches Lager muss selbstverständlich für den Fall niedriger Geschwindigkeiten Notlaufeigenschaften aufweisen. Diese können beispielsweise durch zusätzliche Kombination mit einer hydrostatischen Ausgestaltung erreicht werden.

Besonders günstig ist die Kombination einer Hydrodynamischen bzw. hydrostatischen Lagerung in Verbindung mit einer aktiven Lageregelung. Diese können beispielsweise in der gleichen Achse für eine besonders präzise Ausrichtung oder auch in ergänzender Weise in unterschiedlichen Achsen eingesetzt werden. So kann beispielsweise auch die Lageregelung durch Steuerung von Luftstrom bzw. Luftdruck einer hydrodynamischen bzw. hydrostatischen Lagerung erfolgen. Durch diese Kombination erhält man einerseits ein mechanische robustes System, welches durch eine zusätzliche überlagerte Regelung hochpräzise Eigenschaften erhält. Dadurch können insbesondere auch Toleranzen in dem Abstand der Luftlagerung aufgrund von Temperatur- und Feuchtigkeitsschwankungen der Luft sowie Schwankungen der Geschwindigkeit ausgeglichen werden.

In einer weiteren vorteilhaften Ausgestaltung der Erfindung ist der Sensor als optischer Sensor ausgebildet. So kann er beispielsweise zur Messung der Größe eines Abbildes einer Lichtquelle, welches im Fokus, der dem optimalen Abstand entspricht, eine minimale Größe aufweist, ausgelegt sein. Derartige Verfahren werden beispielsweise zur Fokussierung in CD-Spielern eingesetzt.

In einer weiteren vorteilhaften Ausgestaltung der Erfindung wird der Sensor wahlweise als kapazitiver oder induktiver Sensor ausgeführt. Hierbei ist der Sensor vorzugsweise als Differentialsensor, welcher die Differenz zweier Signale auswertet, ausgebildet.

Eine weitere vorteilhafte Ausgestaltung der Erfindung sieht vor, dass parallel zum Lichtleiter eine Referenzspur vorgesehen ist. Diese Referenzspur dient dem Sensor zur Ermittlung der exakten Lage des Lichtleiters und als Messsignal für die Regelung eines zweiten Lichtkopplers.

In einer weiteren vorteilhaften. Ausgestaltung der Erfindung ist der Aktuator als elektromagnetische Aufhängung wenigstens eines zweiten Lichtkopplers ausgeführt. Eine solche elektromagnetische Aufhängung trägt bzw. positioniert einen Lichtkoppler in wenigstens einer, wahlweise aber auch in zwei Achsen. Bevorzugt ist das Koppelelement in eine elektromagnetische Aufhängung integriert. Durch diese Integration lässt sich eine äußerst kompakte Baugruppe erreichen. Weiterhin ist hierdurch die bewegliche Masse besonders klein, so dass eine Regelung mit hoher Geschwindigkeit möglich wird. Vorteilhafterweise wird durch den Aktuator nur eine bewegliche Komponente des Lichtkopplers bewegt, so dass beispielsweise ein vorhandener Lichtleiter zur Lichtzuführung nicht mitbewegt werden muss. Dies bedeutet, dass beispielsweise der ganze Lichtkoppler in Form eines Kollimators und oder auch nur eine einzige Linse des Lichtkopplers bewegt werden kann.

In einer anderen vorteilhaften Ausgestaltung der Erfindung ist der Lichtleiter erfindungsgemäß in wenigstens zwei Segmente unterteilt, wobei Mittel zur optischen Isolation der Segmente untereinander vorgesehen sind. Eine optische Isolation kann beispielsweise durch absorbierende Materialien zwischen den Segmenten, durch Lichtablenkung zwischen den Segmenten, wie beispielsweise mittels Spiegeln, Gittern oder streuenden Materialien oder aber auch durch eine Richtungstrennung der optischen Signale erfolgen.

Zusätzlich sind die Längen der Segmente sowie die Ausbreitungsrichtungen des Lichts in den Segmenten derart dimensioniert, dass an den Grenzen zwischen zwei beliebigen Segmenten, in denen das gleiche Signal übertragen wird, das Modulationssignal in Laufzeit beziehungsweise Phase nur geringfügige Unterschiede aufweist. Diese Unterschiede sollen klein gegenüber einer Periodendauer des Modulationssignals sein. Somit weist auch die gesamte Signallaufzeit des Signals vom optischen Sender zum optischen Empfänger an den Grenzen der Segmente nur geringfügige Unterschiede auf. Dies ist notwendig, um eine breitbandige Signalübertragung zu gewährleisten. Damit eine störungsfreie Übertragung über den gesamten Drehbereich von 360 Grad möglich ist, müssen die oben genannten Voraussetzungen für sämtliche Verbindungsstellen zwischen jeweils zwei benachbarten Segmenten zutreffen.

Selbstverständlich können mit einer erfindungsgemäßen Vorrichtung auch mehrere Signale gleichzeitig übertragen werden. Es muss nur die zuvor genannte Bedingung für jedes dieser Signale selbst erfüllt sein. Die Beziehung zwischen unterschiedlichen Signalen kann beliebig sein.

Die Isolation (Absorber) zwischen mehreren Segmenten kann auch als reflexionsarme Auskoppelstelle realisiert werden. An dieser kann beispielsweise ein Überwachungsempfänger zur Überwachung der Sendesignalamplitude angebracht werden. Ebenso kann diese Isolation wellenlängenabhängig ausgebildet sein. Bevorzugt ist diese als dünne Folie ausgestaltet.

In einer weiteren vorteilhaften Ausgestaltung der Erfindung sind Gruppen aus jeweils zwei benachbarten Lichtleitern vorgesehen, welche gleich lang sind und eine entgegengesetzte Ausbreitungsrichtung des Lichts aufweisen. Im einfachsten Falle weist die ganze Anordnung, wie oben beschrieben, nur eine einzige solche Gruppe auf. Ebenso können aber mehrere solcher Gruppen entlang des Kreisumfangs angeordnet werden. Diese können auch jeweils unterschiedliche Segmentlängen aufweisen, solange beide Segmente einer Gruppe die gleiche Länge besitzen. So können beispielsweise aus konstruktiven Gründen zur Vereinfachung der Befestigung unterschiedliche Segmentlängen vorgesehen sein. Die Unterteilung in mehrere Segmente bietet auch den Vorteil, dass in jedem Segment unabhängig von den benachbarten Segmenten Daten übertragen werden können. Dies bedeutet, dass eine entsprechend höhere gesamte Datenrate realisierbar ist. Wird beispielsweise eine Anordnung von vier Gruppen über den ganzen Kreisumfang vorgesehen, so lässt sich durch gleichzeitige Übertragung von vier Signalen die gesamte Datenrate vervielfachen.

Vorteilhafterweise ist hierzu der Lichtleiter in eine gerade Anzahl von Segmenten unterteilt. Durch die gerade Anzahl von Segmenten lässt sich die Anordnung aufgrund der Symmetrie besonders einfach realisieren. Eine besonders kostengünstige Ausgestaltung ergibt sich mit zwei Segmenten. Um mit zwei Segmenten eine konstante Laufzeit an den Segmentgrenzen zu erreichen, müssen diese eine gleiche Länge sowie entgegengesetzte Ausbreitungsrichtungen des Lichts aufweisen. Im Falle von zwei Segmenten ist der Absorber an einer Position 180 Grad gegenüber der Einkoppelstelle angeordnet. Dies bedeutet im Falle der Lichteinkopplung in die erste Einheit einen um 180 Grad um die Drehachse der beiden Einheiten versetzt angeordneten Absorber. Bei einer Lichteinkopplung in die zweite Einheit (und Übertragung von dort in die erste Einheit) wird ein mit der Drehbewegung der zweiten Einheit gegenüber dem Spiegelgraben nachgeführter Absorber eingesetzt. Auch diese Absorber kann beispielsweise durch eine Lageregelung oder hydrostatische bzw. hydrodynamische Lagerung, wie diese für die zweite Lichtkoppler beschrieben ist, in einer Sollposition gehalten werden.

In einer weiteren vorteilhaften Ausgestaltung der Erfindung ist wenigstens ein zweiter Lichtkoppler vorgesehen, welcher eine lichtleitende Faser umfasst. Das Ende dieser Faser weist eine Fläche auf, welche zur seitlichen Ablenkung des in der lichtleitenden Faser geführten Lichtes dient. Durch Ablenkung an dieser Fläche kann das Licht nun in einen Winkel abgelenkt werden, in dem es weiter in dem Lichtleiter geführt werden kann. Auf Grund der Reziprozität des optischen Systems ist selbstverständlich mit dieser Ausgestaltung auch eine Einkopplung von in dem Lichtleiter geführten Licht in die optischen Faser möglich. Zur weiteren Optimierung kann die Faser wahlweise an die Kontur des Lichtleiters angepasst werden. Dadurch kann eine Lichteinkopplung auf einer möglichst großen Fläche des Lichtleiters erfolgen. Zur Lichtablenkung kann die Fläche zur Ablenkung durch Totalreflexion auf Grund unterschiedlicher Brechungsindizes ausgestaltet sein, ebenso kann sie aber auch verspiegelt sein oder ein Beugungsgitter enthalten.

Eine weitere vorteilhafte Ausgestaltung der Erfindung besteht darin, dass die lichtleitende Faser näherungsweise senkrecht zur Tangente des Lichtleiters angeordnet ist. Weiterhin verläuft der Reflexionswinkel des austretenden Lichts vorteilhafterweise nahezu tangential zum Lichtleiter.

Weiterhin kann die lichtleitende Faser gleichzeitig als optischer Sensor eingesetzt werden. Hierzu sind vorzugsweise weitere Flächen zur Ablenkung der Sensorsignale in Richtung der Kontur des Lichtleiters vorgesehen. Durch diese Integration kann die Anzahl der benötigten Komponenten reduziert werden. Weiterhin wird die mechanische Justage vereinfacht, da die aufwändige präzise Justierung zweier Komponenten zueinander entfällt.

In einer anderen Ausgestaltung ist wenigstens eine weitere Fläche derart ausgestaltet, dass mit dieser Sensorsignale wellenlängenselektiv abgelenkt bzw. gefiltert werden können. Durch diese Selektivität der Wellenlängen kann auf einfache Weise eine Selektion der verschiedenen Richtungen erreicht werden.

Eine weitere vorteilhafte Ausgestaltung der Erfindung sieht vor, dass wenigstens ein zweiter Lichtkoppler zur Verkopplung evaneszenter Felder vorgesehen ist. Durch die Verkopplung evaneszenter Felder ist eine berührungslose Ein- bzw. Auskopplung in den Lichtleiter auf kurze Distanzen möglich.

Einen zweiter Lichtkoppler zur Verkopplung evaneszenter Felder wird bevorzugt als Prisma ausgebildet. Ein solches Prisma kann dann zur Verkopplung bevorzugt im Abstand der Größenordnung einer halben Wellenlänge, also einigen Mikrometern bzw. Nanometern über dem Lichtleiter geführt werden.

In einer anderen Ausgestaltung der Erfindung weist der Lichtleiter wenigstens eine Grenzfläche mit vorzugsweise reflektierenden Eigenschaften auf. Durch Reflexion an wenigstens einer solchen Grenzfläche ist eine gezielte Führung des Lichts entlang der vorzugsweise kreisförmigen Kontur des Lichtleiters möglich.

Einer anderen Ausgestaltung der Erfindung weist der Lichtleiter wenigstens ein Material mit einer spiegelnden Oberfläche auf. So kann er beispielsweise als Graben in einem metallischen Träger mit spiegelnd bearbeiteter Oberfläche ausgestaltet sein. Eine Bearbeitung, mit der man eine spiegelnde Oberfläche erhält, kann beispielsweise mit Diamantwerkzeugen erfolgen.

In einer weiteren Ausgestaltung der Erfindung umfasst der Lichtleiter wenigstens ein Material mit einer verspiegelten Oberfläche. Somit wird also eine zusätzliche Schicht mit spiegelnden Eigenschaften auf den . Lichtleiter aufgebracht. Derartige Schichten können beispielsweise galvanisch oder durch Bedampfung im Vakuum aufgebracht werden. Besonders gut geeignet als Beschichtungsmaterial ist Gold, da dies bei einer Wellenlänge von 1,3 Mikrometer, für welche kostengünstige optische Komponenten auf dem Markt sind, eine sehr hohe Reflexionskonstante bietet. Weiterhin kann dadurch ein äußerst korrosionsbeständiger Überzug der Oberfläche erreicht werden.

In einer verbesserten Ausgestaltung der Erfindung ist die verspiegelte Oberfläche wahlweise mittels einer reflektierenden oder reflektierend beschichteten Folie realisiert. Derartige Folien sind kostengünstig herstellbar und auf einfache Art und Weise auf beliebige Träger, beispielsweise aus Kunststoff oder Metall aufbringbar. Alternativ hierzu kann wahlweise zur Verspiegelung der Oberfläche eine spiegelnde Schicht galvanisch oder durch Vakuumbeschichtung aufgebracht sein. Mit derartigen Schichten lassen sich besonders hohe Reflexionsgrade erreichen.

Eine weitere vorteilhafte Ausgestaltung der Erfindung zeichnet sich dadurch aus, dass die Oberfläche ein interferenzfähiges Mehrschichtsystem aufweist. Dadurch lässt sich vorteilhafterweise eine gezielte wellenlängenabhängige Reflexion erreichen. So lässt sich hiermit ein erfindungsgemäßer Lichtleiter derart ausgestalten, dass er bevorzugt die zur Signalübertragung verwendeten Wellenlängen, aber kein Streulicht aus der Umgebung überträgt. Hier lässt sich insbesondere in offenen Lichtleitern eine besonders hohe Fremdlichtunterdrückung erreichen. Weiterhin kann im Falle der Übertragung mehrerer Kanäle mit unterschiedlichen Wellenlängen eine gezielte wellenlängenabhängige Reflexion erreicht werden.

Eine andere Ausgestaltung der Erfindung sieht vor, dass die Oberfläche eine Schutzschicht aufweist. Eine solche Schutzschicht kann beispielsweise eine Verschmutzung oder auch eine chemische Veränderung, wie Oxidation verhindern oder zumindest verlangsamen. Diese Schutzschicht ist vorteilhafterweise derart ausgebildet, dass sie die reflektierenden Eigenschaften der darunter liegenden reflektierenden Schichten möglichst wenig beeinträchtigt, sowie für das zu übertragende Licht eine möglichst geringe Dämpfung darstellt.

Eine weitere vorteilhafte Ausgestaltung der Erfindung sieht vor, dass der Lichtleiter wenigstens einseitig eine Grenzfläche gegen Luft aufweist, in der eine Welle ähnlich einer Filmwelle oder Oberflächenwelle führbar ist. Eine solche Welle breitet sich in der Grenzschicht des Lichtleiters zum umgebenden Medium aus und kann durch einen Koppler von außen ein- bzw. ausgekoppelt werden. Vorteilhafterweise wird zu Kopplung ein Prisma eingesetzt.

In einer anderen Ausgestaltung der Erfindung ist ein optisches Gitter zu Lichtauskopplung am Lichtleiter angebracht. Derartige optische Gitter sind besonders einfach und platzsparend integrierbar. Mit einem solchen Gitter ist auch gleichzeitig eine Isolation zwischen den verschiedenen Segmenten realisierbar, wenn es beispielsweise das Licht an den Grenzen aus dem Lichtleiter herausleitet. Weiterhin können diese Gitter wellenlängenselektiv ausgestaltet sein, so dass unterschiedliche Wellenlängen an unterschiedlichen Orten ausgekoppelt werden können. Damit lässt sich auf geringstem Raum eine mehrkanalige Signalübertragung im Wellenlängenmultiplex realisieren.

Eine andere Ausgestaltung der Erfindung sieht eine Fresnelstruktur zur Lichtauskopplung am Lichtleiter vor. Derartige Strukturen sind in modernen Formtechniken besonders kostengünstig realisierbar.

In einer weiteren vorteilhaften Ausgestaltung der Erfindung sind wahlweise optischer Sender bzw. optischer Empfänger gleichzeitig als Lichtkoppler ausgebildet. So kann beispielsweise zum optischen Empfang an Stelle eines Lichtkopplers mit nachgeschaltetem optischen Empfänger direkt eine Fotodiode wahlweise in die erste oder zweite Einheit integriert werden. Damit kombiniert sie die funktionellen Merkmale von optischem Empfänger und Lichtkoppler. Ebenso kann beispielsweise eine Laserdiode oder LED zur Lichtaussendung wahlweise in die erste oder zweite Einheit integriert werden. Damit vereint diese die funktionellen Merkmale von Lichtkoppler und optischem Sender.

Eine weitere Ausgestaltung der Erfindung sieht einen Lichtleiter vor, der aus einer Faser mit einer verspiegelten Oberflächenbeschichtung besteht. Eine solche Faser, die auf der Außenseite zum Beispiel mit Gold oder einer interferenzfähigen Mehrlagenbeschichtung versehen ist, wird nachträglich in einen vorgefertigten Graben oder einen anderen Träger aufgebracht bzw. aufgeklebt. Damit werden die Reflexionseigenschaften nicht mehr durch die Grabenoberfläche, sondern durch die extrem glatte Oberfläche der Faser bestimmt. Hierdurch können die Fertigungskosten wesentlich reduziert werden, da Fasern kostengünstig herstellbar sind und gleichzeitig der Aufwand der spanenden Bearbeitung der meist großen ersten Einheit reduziert wird.

In anderen Ausgestaltung der Erfindung umfasst der Lichtleiter eine an der Außenseite oder Innenseite spiegelnd beschichtete Röhre. Eine solche Röhre kann ebenso wie die zuvor beschriebene Faser eingesetzt werden und bietet die selben Vorteile.

Eine weitere vorteilhafte Ausgestaltung der Erfindung weist einen Lichtleiter mit Sammeleigenschaften in mindestens eine Ebene auf. Dadurch kann eine Aufweitung des Lichtstrahls reduziert bzw. der Lichtstrahl weiter gebündelt werden.

Eine weitere vorteilhafte Ausgestaltung der Erfindung ist zur gleichzeitigen Übertragung mehrerer Kanäle einsetzbar, indem zur Übertragung unterschiedliche optische Wellenlängen vorgesehen sind. Durch wellenlängenselektive Aussendung der Signale und wellenlängenselektiven Empfang der Signale können diese eindeutig voneinander getrennt werden.

Eine besonders vorteilhafte Ausgestaltung zur wellenlängenselektiven Übertragung mehrerer Kanäle ergibt sich, wenn insbesondere mehrere erste Lichtkoppler an unterschiedlichen Positionen des Lichtleiters angeordnet sind. Vorteilhafterweise sind dann die Mittel zur Isolation an entsprechenden Positionen wellenlängenabhängig vorzusehen. Ebenso sind vorteilhafterweise die zweiten Lichtkoppler entsprechend an unterschiedlichen Positionen der zweiten Einheit angeordnet. Diese Anordnung an unterschiedlichen Positionen vereinfacht die mechanische Anbringung von Lichtkopplern und reduziert den Aufwand an optischen Komponenten.

Weiterhin ist vorteilhafterweise mindestens ein Mittel zur optischen Isolation wellenlängenselektiv ausgebildet.

Vorzugsweise sind mehrere Mittel zur optischen Isolation wellenlängenselektiv ausgebildet und an beiden Orten entsprechend den Segmentgrenzen für die jeweilige Wellenlänge angeordnet. Diese Ausgestaltung erlaubt beispielsweise wellenlängenabhängig unterschiedliche Segmentierungen bzw. unterschiedliche Anordnungen der Segmentgrenzen, wie sie bei Anordnung der Lichtkoppler an unterschiedlichen Positionen notwendig ist.

Eine andere vorteilhafte Ausgestaltung der Erfindung sieht vor, dass polarisiertes Licht im Lichtleiter übertragen wird. Messungen haben gezeigt, dass viele Lichtleiter Licht mit einer bestimmten Polarisation mit besonders niedriger Dämpfung übertragen. Besonders vorteilhaft ist beispielsweise eine Übertragung von Licht mit einer Polarisation senkrecht zu einer Metalloberfläche, wie diese beispielsweise bei einem verspiegelten Graben als Lichtleiter eingesetzt wird. Bevorzugt wird das polarisiert die Licht mittels einer polarisiert Lichtquelle (14) erzeugt. Ebenso können in dem optischen Pfad aber auch Polarisationsfilter vorgesehen werden. Diese können beispielsweise in einen Lichtkoppler integriert sein.

In einer weiteren vorteilhaften Ausgestaltung der Erfindung ist wenigstens ein polarisationsempfindlicher Empfänger vorgesehen. Wahlweise kann einem Empfänger ein Polarisationsfilter vorgeschaltet werden. Wird zur Signalaussendung eine unpolarisierte Lichtquelle verwendet, so breitet sich das Licht abhängig von der Polarisation mit unterschiedlichen Dämpfungen und oftmals auch mit unterschiedlichen Laufzeiten aus.

Durch einen Polarisationsselektiven Empfänger kann nun eine bestimmte Polarisation mit einer definierten Laufzeit bzw. einer definierten Dämpfung ausgewählt werden. Hierdurch ergibt sich eine weitgehend positionsunabhängige Amplitude sowie die geringste Signalverzerrung.

Eine weitere vorteilhafte Ausgestaltung der Erfindung sieht vor, dass mehrere optischer Sender (14) zur Aussendung von polarisiertem Licht vorgesehen sind und gleichzeitig mehrere Polarisationsselektive optische Empfänger (15) zum Empfang von polarisiertem Licht vorgesehen sind. Dabei werden mehrere Gruppen aus optischen Sendern und Empfängern gebildet wird, welche jeweils in der Polarisation derart aufeinander abgestimmt sind, dass eine Signalübertragung innerhalb der Gruppe stattfindet, aber keine Signale zu Empfängern von anderen Gruppen übertragen werden. Dadurch lässt sich über unterschiedliche Polarisationen eine Vielzahl von Kanälen gleichzeitig übertragen.

In einer anderen Ausgestaltung der Erfindung erfolgt die Signalübertragung mittels einer Modulation der Polarisation. Hierzu ist wenigstens ein optischer Sender (14) vorgesehen, welcher vorzugsweise polarisiertes Licht aussendet. Weiterhin ist wenigstens ein Mittel zur Modulation der Polarisation des Senders wahlweise im Sender selbst oder im optischen Pfad zwischen Sender und Empfänger vorgesehen. Zur Auswertung der Polarisationsmodulation ist ein optischer Empfänger vorgesehen, welcher Mittel aufweist, um eine Polarisationsänderung in eine Amplitudemodulation umzusetzen. Dies kann beispielsweise ein einfaches Polarisationsfilter sein.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt in allgemeiner Form schematisch eine erfindungsgemäße Vorrichtung.
Fig. 2 zeigt schematisch eine erfindungsgemäße Vorrichtung in der Draufsicht.
Fig. 3 erläutert die Problematik der Bandbreitenbegrenzung entsprechend dem Stand der Technik.
Fig. 4 zeigt schematisch die Übertragung optischer Signale von der ersten Einheit zur zweiten Einheit.
Fig. 5 zeigt schematisch die Übertragung optischer Signale von der zweiten Einheit zur ersten Einheit.
Fig. 6, 7 und 8 zeigen einen kapazitiven Positionssensor.
Fig. 9 und 10 zeigen zweite Lichtkoppler, die in einen Aktuator integriert sind.
Fig. 11 zeigt einen optischen Positionssensor.
Fig. 12 zeigt einen zweiten Lichtkoppler mit integriertem optischen Positionssensor.
Fig. 13 zeigt den in Fig. 12 dargestellten zweiten Lichtkoppler zur Veranschaulichung in perspektivischer Ansicht.
Fig. 14 zeigt schematisch die Licht ein- bzw. Auskopplung in den Lichtleiter mittels eines zweiten Lichtkopplers.
Fig. 15 zeigt den schematischen Aufbau der Steuerung und Integration eines zweiten Lichtkopplers mit integriertem optischen Positionssensor.
Fig. 16 zeigt einen Lichtleiter mit reflektierender Beschichtung.
Fig. 17 zeigt einen Lichtleiter aus einer beschichteten Faser.
Fig. 18 zeigt den prinzipiellen Aufbau eines Gitterkopplers.
Fig. 19 zeigt eine Signalkopplung mittels einer Fresnelstruktur.
Fig. 20 zeigt eine Vorrichtung zur Einkopplung einer Oberflächenwelle.
Fig. 21 zeigt eine Vorrichtung mit integrierter aktiver und passiver Lageregelung.

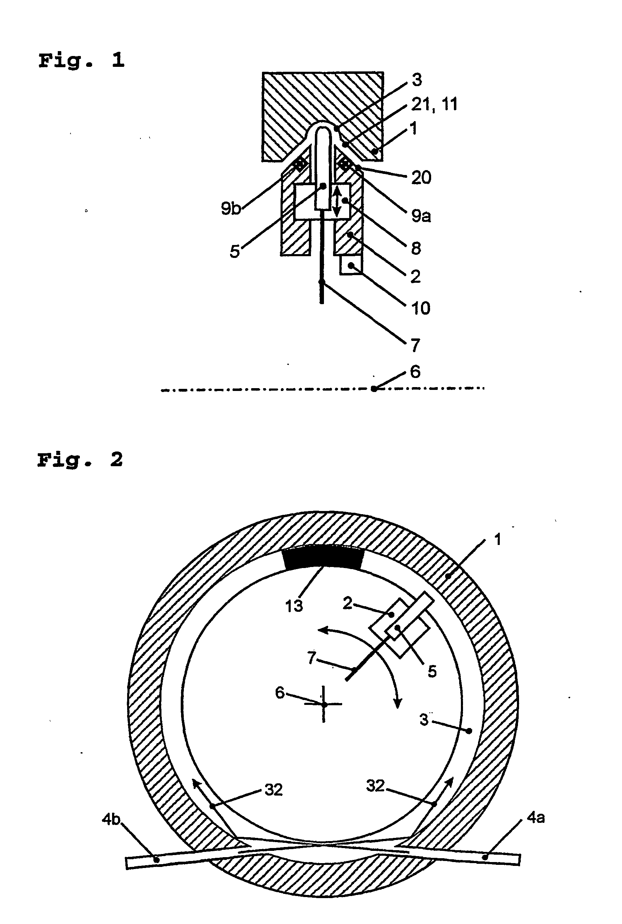

Fig. 1 zeigt in schematischer Form eine erfindungsgemäße Vorrichtung im Schnitt. Darin sind sowohl die erste Einheit (1) als auch die zweite Einheit (2) als Scheiben mit zentrischer Bohrung, welche um die Drehachse (6) drehbar gelagert sind, dargestellt. Der Lichtleiter (3) ist hier beispielhaft als auf der Innenseite verspiegelter Graben dargestellt. Er erstreckt sich um den gesamten Umfang der ersten Einheit. Im Eingriff mit diesem Graben ist ein zweiter Lichtkoppler (5), welcher an der zweiten Einheit (2) angeordnet ist. Dieser Lichtkoppler greift das in dem Lichtleiter geführte Licht ab und leitet es mit einer lichtleitenden Faser (7) weiter. Zur exakten Ausrichtung von Lichtleiter und zweitem Lichtkoppler in einer Achse ist eine Hydrodynamischen Lagerung sowie eine elektrodynamische Lageregelung vorgesehen. Die hydrodynamische Lagerung basiert auf einem dünnen Luftfilm, welche sich durch die Bewegung der beiden Einheiten gegeneinander zwischen der ersten Lagerfläche (21) und der zweiten Lagerfläche (20) ausgebildet wird. Zur Unterstützung sind beispielsweise zusätzliche Mittel zur Luftführung vorgesehen. Weiterhin hat die Vorrichtung vorteilhafterweise Notlaufeigenschaften, die auch noch eine gewisse Führung bei niedrigen Geschwindigkeiten ohne ausreichenden Luftfilm gewährleisten, wie sie beispielsweise in einer Beschleunigungs- oder Bremsphase auftreten. Weiterhin ist zur exakten Positionierung ein Sensor (9) zur Ermittlung des Abstandes zwischen den beiden Einheiten vorgesehen. Dieser Sensor tastet hier den Abstand zu einer Referenzspur (11) ab, welche im vorliegenden Beispiel identisch mit der ersten Lagerfläche (21) ist. Die Ausgangsignale des Sensors werden mittels einer Steuereinheit (10) weiterbearbeitet und dem Aktuator (8) zur exakten Regelung der Lage des zweiten Lichtkopplers zugeführt.

Fig. 2 zeigt in schematischer Form eine erfindungsgemäße Vorrichtung in der Draufsicht. Eine erste Einheit (1) dient zur Aufnahme eines ringförmigen Lichtleiters (3). Dieser Lichtleiter ist beispielsweise ein auf der Innenseite verspiegelter Graben. Eine zweite Einheit (2) dreht sich gegenüber der ersten Einheit um die Drehachse (6). Die zweite Einheit enthält einen zweiten Lichtkoppler (5). Die Funktionsweise soll nun für die beiden Übertragungsrichtungen von der ersten Einheit zur zweiten Einheit bzw. von der zweiten Einheit zur ersten Einheit getrennt dargestellt werden. Übertragung von der ersten Einheit zur zweiten Einheit: Licht aus einem nicht dargestellten Sender wird bezogen auf das Modulationssignal gleichphasig mittels der beiden ersten Lichtkoppler (4a, 4b) in den Lichtleiter (3) eingespeist. Das Licht vom ersten Lichtkoppler (4a) läuft auf der rechten Seite der Abbildung bis zum Absorber (13). Gleichzeitig läuft das Licht des ersten Lichtkopplers (4b) auf der linken Seite bis zum Absorber (13). Der Absorber ist symmetrisch in Bezug auf die Einkoppelstelle der ersten Lichtkoppler angeordnet, so dass die Lichtwege (32) auf beiden Seiten gleich lang sind. Der Abgriff des Lichts erfolgt mittels eines zweiten Lichtkopplers (5), welcher um die Drehachse (6) entlang der Bahn des Lichtleiters (3) drehbar gelagert ist und das abgegriffene Licht einem optischen Empfänger zuführt. Zur Vereinfachung ist der optische Empfänger ebenfalls nicht abgebildet.

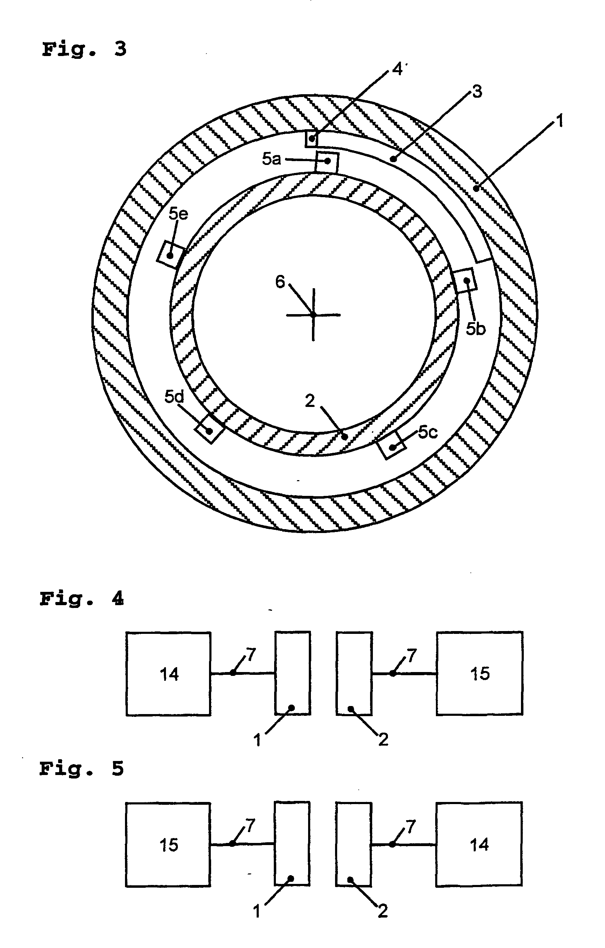

In Fig. 3 ist am Stand der Technik aus der US 6,104,849 das Problem der Bandbreitenbegrenzung dargestellt. So wird hier Licht von einer zweiten Einheit (2), welche sich um die Drehachse (6) dreht, zu einer ersten Einheit (1) übertragen. Die Lichtaussendung erfolgt mittels der zweiten Lichtkoppler (5a, 5b, 5c, 5d, 5e). Das von diesen Lichtkopplern ausgesendete Licht wird im Falle des Eingriffs in den Lichtleiter (3) zum ersten Lichtkoppler (4) übertragen. Der problematische Grenzfall tritt ein, wenn beispielsweise bei einer Drehung entgegen dem Uhrzeigersinn der zweite Lichtkoppler (5a) gerade aus dem Lichtleiter austritt und der zweite Lichtkoppler (5b) in den Lichtleiter eintritt. Da alle zweiten Lichtkoppler gleichphasig von einer Lichtquelle gespeist werden, tritt in diesem Grenzfall das Licht des zweiten Lichtkopplers (5a) auf kürzestem Wege zum ersten Lichtkoppler (4) über. Das Licht des anderen zweiten Lichtkopplers (5b) muss aber eine Weglänge über das Ganze Lichtleitersegment (3) zurücklegen und tritt somit zeitlich verzögert in den ersten Lichtkoppler über. Wird beispielsweise bei einem Computertomografen mit einem freien Innendurchmesser vom Lichtleiter ein Viertel des Kreisumfanges umfasst, so entspricht dies zirka einer Weglänge von 0,8 Meter. Die Verzögerung einer sich mit Lichtgeschwindigkeit ausbreitenden optischen Welle entspricht 2,6 Nanosekunden. Werden nun Signale mit wesentlich kürzeren Pulsdauern übertragen, so führt dies zum doppelten Empfang der Signale bzw. bei einer Überlagerung der Signale zu Verzerrungen und Verfälschungen. Eine sinnvolle Datenübertragung ist nur dann möglich, wenn bei Digitalsignalen eine Bitbreite wesentlich größer als diese Laufzeit ist. In diesem Beispiel wären somit noch Daten mit einer Bitbreite von größer 10 Nanosekunden, also eine Datenrate von 100 MBit/s übertragbar. In den anderen, dem Stand der Technik entsprechenden, zuvor zitierten Ausführungsformen ist meist der Lichtleiter um den ganzen Umfang angeordnet, und meist nur ein zweiter Lichtkoppler vorgesehen, so dass die Laufzeitdifferenz durch den Umfang der Vorrichtung bestimmt wird. Bei sehr kleinen Vorrichtungen mit wenigen Zentimetern Durchmesser wird häufig die Bandbreitenbegrenzung nicht ins Gewicht fallen.

In Fig. 4 ist die Übertragung optischer Signale von der ersten Einheit zur zweiten Einheit schematisch dargestellt. Ein optischer Sender (14) erzeugt modulierte optische Signale, welche beispielsweise mittels einer lichtleitenden Faser (7) zur ersten Einheit (1) übertragen werden. Von dort aus erfolgt die Kopplung zur zweiten Einheit (2), welche die optischen Signale mittels einer weiteren lichtleitenden Faser (7) zum optischen Empfänger (15) zur Auswertung überträgt.

Fig. 5 zeigt analog in umgekehrter Richtung zur vorhergehenden Figur die Übertragung optischer Signale von der zweiten Einheit zur ersten Einheit.

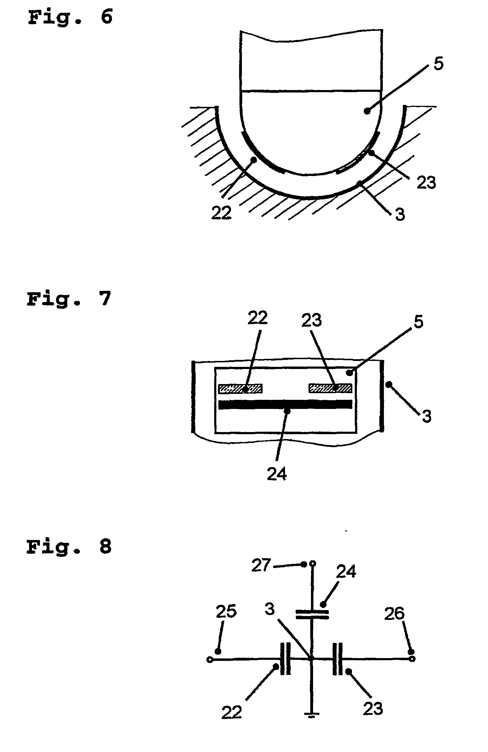

In Fig. 6 ist beispielhaft ein kapazitiver Sensor zur Ermittlung der Position des zweiten Lichtkopplers (5) gegenüber dem Lichtleiter (3) dargestellt. Es sind eine erste kapazitive Sensorfläche (22) sowie eine zweite kapazitive Sensorfläche (23) an dem zweiten Lichtkoppler bzw. an einem mit diesem verbundenen Teil angebracht. In dieser Ausgestaltung muss der Lichtleiter bzw. eine unter dem Lichtleiter befindliche Fläche, wie beispielsweise der Träger des Lichtleiters elektrisch leitfähig ausgebildet sein. Zur Ermittlung der Position des zweiten Lichtkopplers in Bezug auf den Lichtleiter werden die Kapazitäten zwischen der ersten kapazitiven Sensorfläche und dem Lichtleiter sowie zwischen der zweiten kapazitiven Sensorfläche und dem Lichtleiter ermittelt und ausgewertet. Ein derartiger kapazitiver Sensor kann auch unabhängig von Lichtleiter und zweiten Lichtkoppler ausgestaltet sein. Zur Positionsbestimmung in einer Ebene kann er auch nur eine kapazitive Sensorfläche aufweisen. Ebenso kann der bevorzugt in einem U bzw. V-förmig ausgestalteten Graben laufen, der ausschließlich zur Positionsbestimmung dient. Bevorzugt weist dieser Graben zwei senkrecht aufeinander stehende Flächen auf.

Fig. 7 zeigt eine besonders vorteilhafte Ausgestaltung eines kapazitiven Sensors, bei dem eine zusätzliche kapazitive Referenzfläche (24) vorgesehen ist. Da normalerweise der gegenüber dem zweiten Lichtkoppler bewegliche Lichtleiter nicht für elektrische Messungen kontaktierbar ist, kann nun die zusätzliche kapazitive Referenzfläche als Bezug verwendet werden.

Fig. 8 zeigt ein elektrisches Ersatzschaltbild mit den Kapazitäten der ersten kapazitiven Sensorfläche (22), der zweiten kapazitiven Sensorfläche (23) sowie der kapazitiven Referenzfläche (24) zum Lichtleiter (3). Da der Lichtleiter nicht direkt kontaktierbar ist, erfolgt die Messung zur Bestimmung einer ersten Position zwischen erstem Kontaktpunkt (25) und dem Referenzkontaktpunkt (27). Die Messung zur Bestimmung einer zweiten Position zwischen zweiten Kontaktpunkt (26) und dem Referenzkontaktpunkt (27). Um einen möglichst großes Messsignal zu erhalten, wird die durch die kapazitive Referenzfläche (24) gebildete Kapazität möglichst groß gewählt. Die Mittelposition in der Führung lässt sich leicht durch Auswertung der Kapazitätsdifferenzen der Kontaktpunkte (25, 26) zum Referenzkontaktpunkt (27) ermitteln. Der absolute Wert der Kapazitäten ist ein Maß für die absolute Höhe über der Grabenmitte.

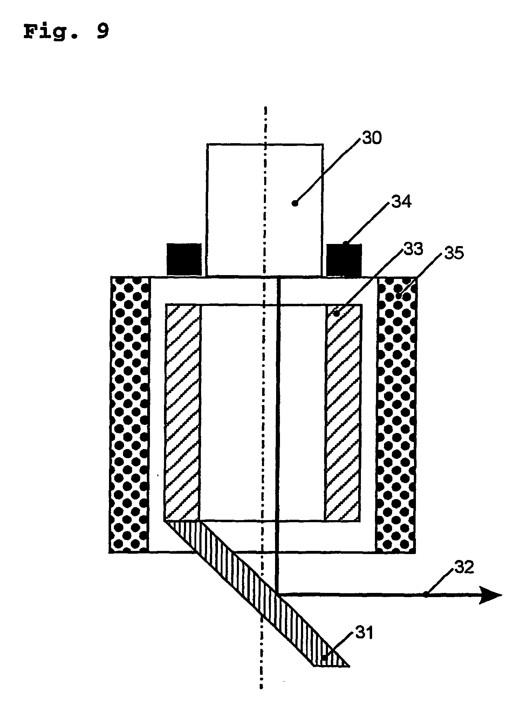

Fig. 9 zeigt eine besonders vorteilhafte Ausgestaltung eines in einen Aktuator integrierten zweiten Lichtkopplers. Der Pfad des Lichtes (32) verläuft von dem optischen System zur Strahlführung bzw.- Formung (30), zum Beispiel einem Kollimator, über den Spiegel (31) in Richtung des hier nicht dargestellten Lichtleiters. Selbstverständlich kann der Lichtpfad auch in entgegengesetzter Richtung verlaufen. Der Spiegel (31) ist an einem Anker (33) befestigt. Die Führung bzw. Lagerung erfolgt durch das Magnetfeld eines Permanentmagneten (34) sowie einer Spule (35). Die hier dargestellte Ausführung bietet den Vorteil einer mechanischen Entkopplung eines Lichtleiters bzw. einer Lichtquelle oder eines Empfängers auf der dem Lichtleiter abgewandten Seite des Kollimators. Um eine wesentlich niedrigere Koppeldämpfung zu erreichen kann allerdings auch an Stelle des Kollimators und des Spiegels ein Wellenleiter eingesetzt werden. Diese Ausgestaltung ist auch weniger schmutzempfindlich.

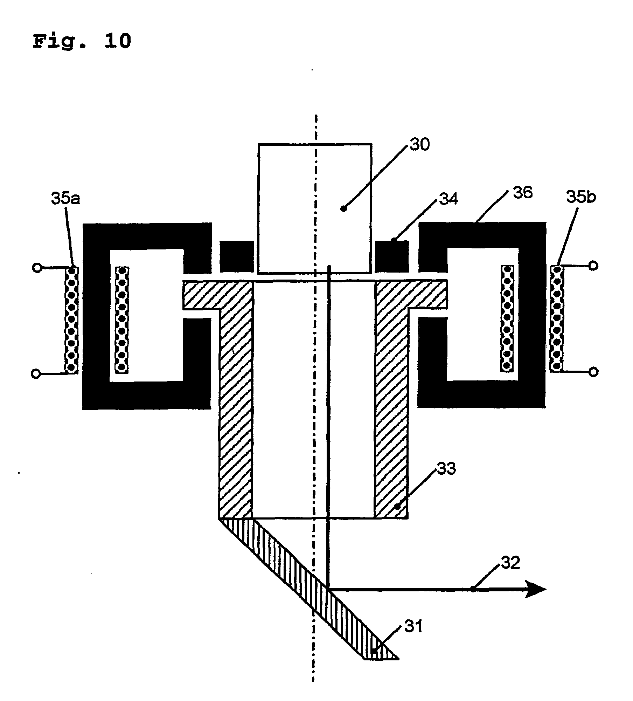

In Fig. 10 ist eine weitere Ausgestaltung eines in einen Aktuator integrierten Lichtkopplers angegeben. Die Ausgestaltung ist zu derjenigen aus Fig. 9 ähnlich. Allerdings ist mindestens ein Joch (36) zur Führung des von wenigstens einer Spule (35a, 35b) erzeugten Magnetfeldes vorgesehen.

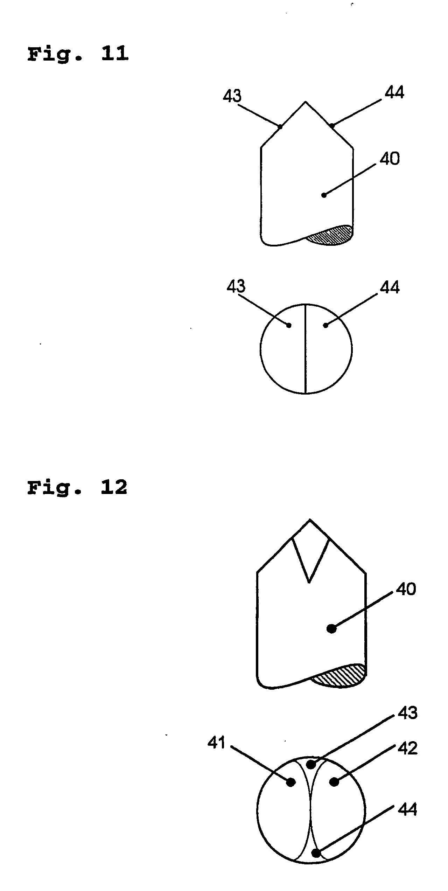

In Fig. 11 ist ein optischer Positionssensor dargestellt. Ein solcher Positionssensor läuft vorteilhafterweise ebenso wie ein zweiter Lichtkoppler (5) in engem Kontakt mit dem Lichtleiter (3). Er umfasst einen optischen Wellenleiter (40), welcher von einer nicht dargestellten Lichtquelle mit Licht wenigstens einer Wellenlänge gespeist wird. Entsprechend der Annäherung einer ersten Sensorfläche (43) bzw. einer zweiten Sensorfläche (44) zu den jeweiligen Berandungen des Lichtleiters wird das Licht mehr oder weniger stark reflektiert. Die Auswertung der Intensität des reflektierten Lichtes erfolgt in einer nicht dargestellten Sensoreinheit, welche im Falle mehrerer Wellenlängen auch eine wellenlängenselektive Auswertung vornimmt. So kann beispielsweise eine erste Sensorfläche (43) mit einer ersten Wellenlänge betrieben werden, während eine zweite Sensorfläche (44) mit einer zweiten Wellenlänge betrieben wird. Hierzu sind vorzugsweise an den Austrittsflächen wellenlängenselektive Filter angebracht. Neben der Auswertung der Intensität kann auch die Anordnung derart ausgelegt werden, dass sich entsprechend dem Abstand die Polarisation des reflektierten Lichtes ändert. Der Sensor ist in Fig. 11 einmal in seitlicher Ansicht und darunter in Draufsicht dargestellt. Dieser Sensor könnte auch um 90 Grad gedreht als Lichtkoppler eingesetzt werden. In diesem Falle würde eine erste Sensorfläche (43) einer ersten Koppelfläche (41) und eine zweite Koppelfläche (44) einer zweiten Sensorfläche (42) entsprechen:

Fig. 12 zeigt einen zweiten Lichtkoppler, welcher mit einem Positionssensor in einer Einheit kombiniert ist. Hier ist zusätzlich zu der zuvor dargestellten Zeichnung eine erste Koppelfläche (41) sowie eine zweite Koppelfläche (42) zur ein- bzw. Auskopplung von Licht zur Informationsübertragung in den Lichtleiter vorgesehen. Vorteilhafterweise sind die erste Koppelfläche und die zweite Koppelfläche diametral gegenüber angeordnet um Licht in beiden Richtungen des Lichtleiters ein- bzw. auszukoppeln.

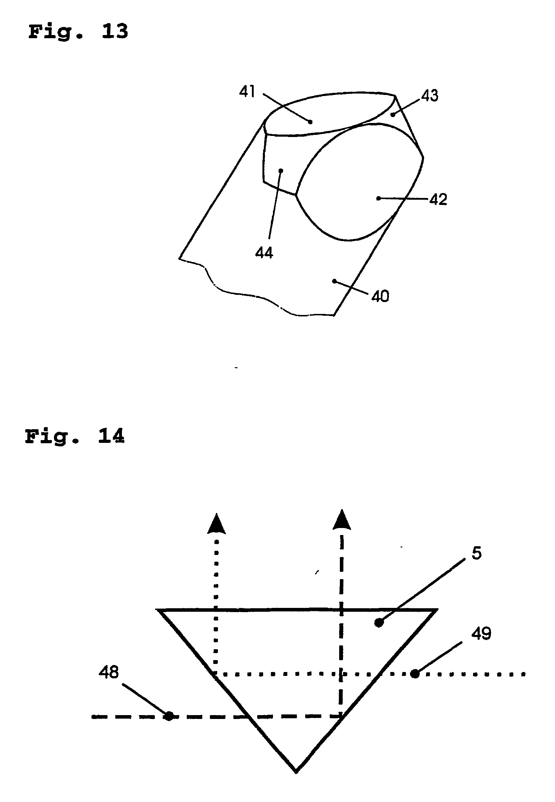

Fig. 13 zeigt den in Fig. 12 dargestellten zweiten Lichtkoppler zur Veranschaulichung in perspektivischer Ansicht.

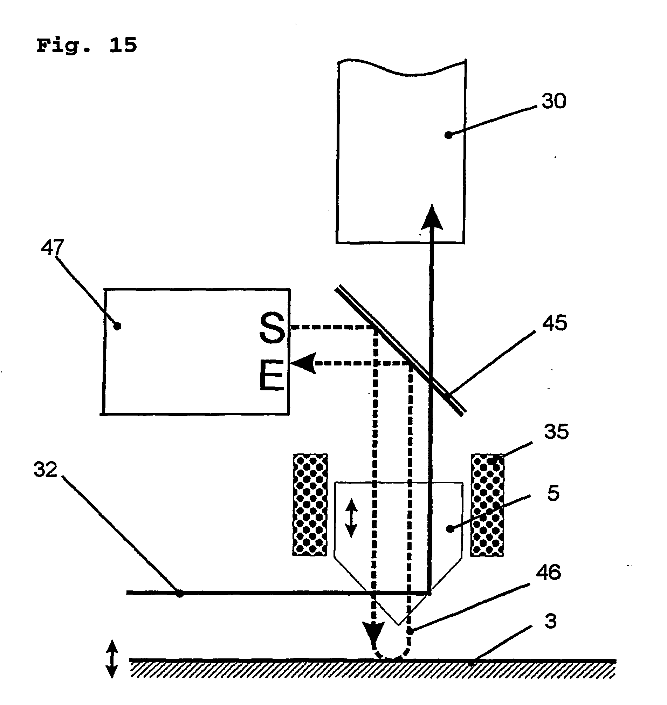

In Fig. 14 ist das Prinzip der Lichtkopplung und Lichtumlenkung dargestellt. So wird zur optischen Kopplung wahlweise in verschiedenen Richtungen des Lichtleiters (3) geführtes Licht in einem zweiten Lichtkoppler (5) abgelenkt. Die Ablenkung erfolgt vorzugsweise durch Brechung. Es kann auf diese Weise sowohl Licht in den Lichtleiter eingekoppelt als auch ausgekoppelt werden. Die gezeichneten Strahlen entsprechen nicht genau dem physikalischen Strahlengang, geben jedoch den Signaltransport schematisch richtig wieder.

In Fig. 15 ist schematisch Aufbau und Integration eines zweiten Lichtkopplers mit integriertem optischen Positionssensor dargestellt. Ein zweiter Lichtkoppler (5) ist beweglich und durch entsprechende Ansteuerung der Spule (35) in seiner Höhe veränderbar angeordnet. Die Strahlführung (32) des Lichtes vom Lichtleiter (3) erfolgt mittels eines zweiten Lichtkopplers (5) in ein optisches System (30) zur Strahlführung bzw. -formung. Dieses System kann das Licht beispielsweise in eine lichtleitende Faser (7) weiterleiten. Ebenso kann aber an dieser Stelle bereits eine lichtleitende Faser ohne weiteres strahlformendes System angeordnet sein. Selbstverständlich kann auch Licht in der umgekehrten Richtung übertragen werden. Zur Ermittlung der exakten Position wird von einem Positionssensor-Sender/Empfänger (47) Licht mittels eines im Strahlengang befindlichen wellenlängenselektiven Spiegel (45) in Richtung des zweiten Lichtkopplers (5) abgelenkt und mittels diesem in den Lichtleiter zur Positionsbestimmung, wie bereits zuvor beschrieben, eingekoppelt. Das abhängig von der Position reflektierte Licht (46) wird wieder über den zweiten Lichtkoppler sowie den wellenlängenselektiven Spiegel zurück zum Positionssensor-Sender/Empfänger (47) zur Auswertung übertragen. Dieser kann nun aus der Lichtintensität die Lage des zweiten Lichtkopplers ermitteln und ein entsprechendes Messsignal an die Steuereinheit zur Steuerung der Spule (35) des Aktuators abgeben. An Stelle eines wellenlängenselektiven Spiegels kann auch, mit allerdings höherer Dämpfung, ein handelsüblicher Schliffkoppler eingesetzt werden. In diesem Fall kann wahlweise auch ein Wellenleiter zur Signalzuführung und Signalkopplung eingesetzt werden.

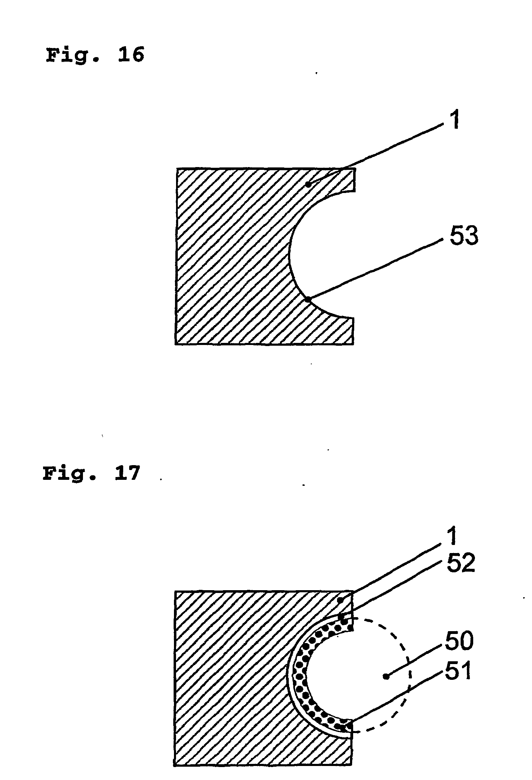

In Fig. 16 ist ein Lichtleiter (3) mit einer reflektierenden Beschichtung dargestellt. Der Lichtleiter besteht in diesem Falle aus einer Nut, welche in die erste Einheit (1) eingebracht ist. Die Oberfläche dieser Nut ist mit einer reflektierenden Beschichtung (53) versehen.

In Fig. 17 ist ein Lichtleiter dargestellt, welcher aus einer beschichteten Röhre hergestellt wurde. Eine reflektierenden beschichtete Röhre (50) wird in einer entsprechenden Nut in einer ersten Einheit (1) mittels Kleber (52) befestigt. Um nun einen grabenförmigen, geöffneten Lichtleiter zu erhalten, wird diese auf die endgültige Kontur (51) nachbearbeitet. Alternativ hierzu kann die Bearbeitung auch vor dem Einkleben erfolgen. Ebenso wie diese Röhre kann auch eine beschichtete Faser eingesetzt werden.

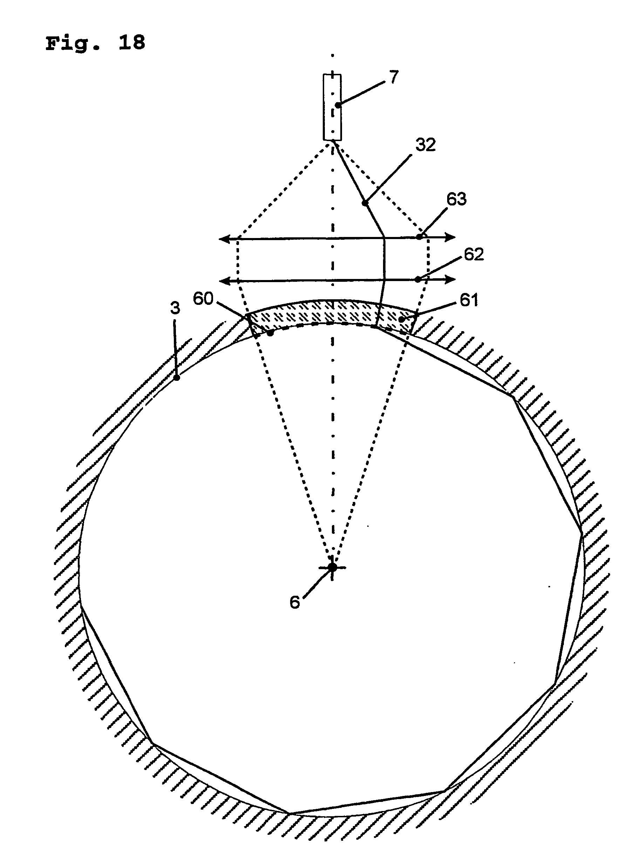

In Fig. 18 ist der prinzipiellen Aufbau eines Gitterkopplers dargestellt. In dieser Ausgestaltung weist der Lichtleiter (3) entlang des Kreisumfanges um die Drehachse (6) eine Aussparung in Form eines Bogensegments auf. In dieser Aussparung befindet sich optisch transparentes Material (61), welches ein optisches Gitter (60) trägt. Lichtstrahlen (32), welche innerhalb dieses Bogensegments auf das Gitter auftreffen werden durch das Gitter nach außen abgelenkt und mittels einer ersten Linse (62) sowie einer zweiten Linse (63) auf die Eintrittsöffnung einer lichtleitenden Faser (7) fokussiert. Selbstverständlich sind auch andere Linsenanordnungen realisierbar. Da die einzelnen Lichtstrahlen zwar an unterschiedlichen Positionen, aber alle unter demselben Winkel auf das Gitter auftreffen, kann eine gleichbleibende Gitterkonstante über das ganze Bogensegment verwendet werden. So lässt sich eine Beugungsordnung erzeugen, die einer divergenten Welle entspricht, welche ihren Ursprung auf der Drehachse (6) hat. Dieser Punkt stellt für alle ausgekoppelten Signale den Brennpunkt dar. Er wird mittels der beiden Linsen auf das Ende der lichtleitenden Faser (7) abgebildet. Die Vorrichtung ist besonders unempfindlich gegen Staub und andere Verschmutzung, da die wesentlichen Komponenten des optischen Systems, die beiden Linsen sowie die lichtleitende Faser in einem geschützten Bereich angeordnet werden können. Weiterhin hat der Lichtleiter selbst durch das eingesetzte optische Gitter keinerlei Löcher oder Hinterschneidungen, an denen sich Verschmutzungen ablagern können.

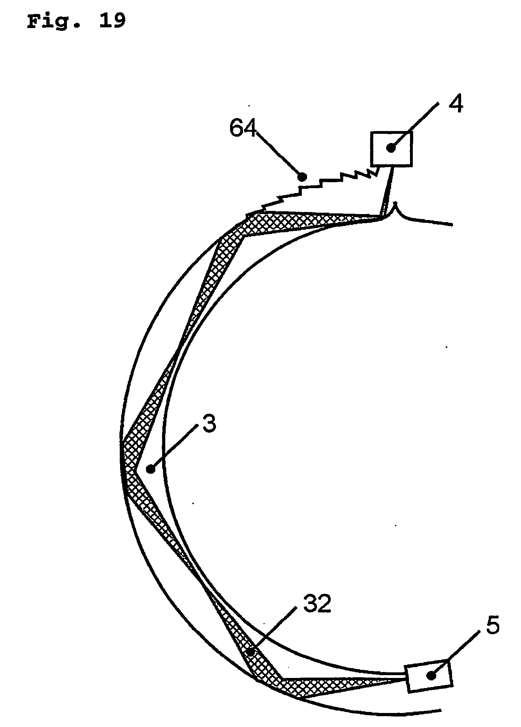

In Fig. 19 ist eine Signalkopplung mittels einer Fresnelstruktur (64) dargestellt. Der einer ersten Einheit (1) zugeordnete Lichtleiter (3) speist in der Nähe eines ersten Lichtkopplers (4) eine stufenförmige Struktur zur Strahlumlenkung des von einem zweiten Lichtkoppler (5) ausgesendeten Strahlbündels in Richtung eines ersten Lichtkopplers.

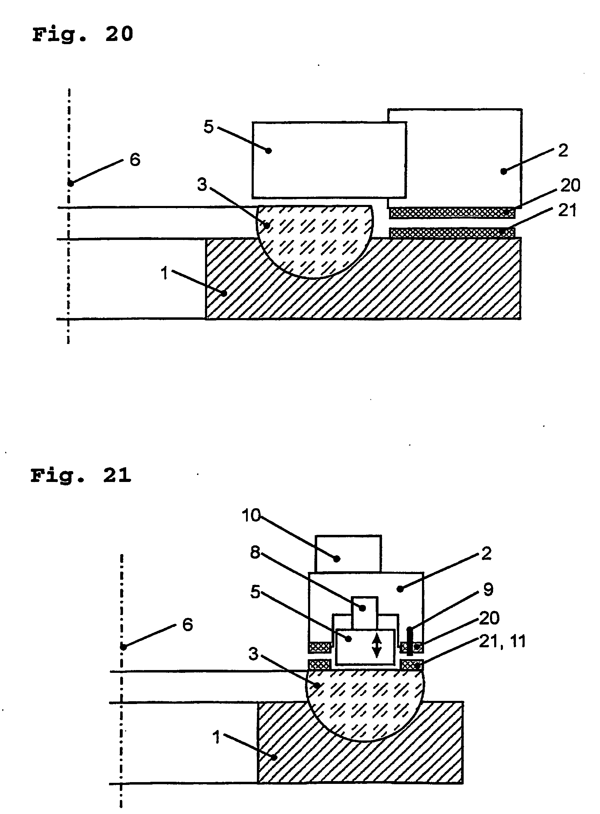

Fig. 20 zeigt eine Ausgestaltung der Erfindung zur Einkopplung einer Filmwelle oder Oberflächenwelle. Der Lichtleiter (3) ist hier beispielhaft als Faser dargestellt, deren Kern angeschliffen ist. Zur Kopplung wird in geringem Abstand über der angeschliffen Fläche des Lichtleiters ein Prisma (5) geführt. In dieses Prisma wird im vorliegenden Beispiel (nicht eingezeichnet), Licht von oben eingekoppelt. Zur exakten Ausrichtung ist ein hydrodynamisches Lager umfassend eine erste Lagerfläche (21) und eine zweite Lagerfläche (20) vorgesehen. Entsprechende Lagerelemente können auch senkrecht hierzu zu einer Stabilisierung in Richtung der einer zweiten Achse vorgesehen werden. Als Lagerfläche kann auch der Lichtleiter selbst eingesetzt werden.

Fig. 21 zeigt eine weitere Ausgestaltung der Erfindung, bei der eine hydrodynamische Lagerung ergänzt durch eine aktive Lageregelung vorgesehen ist. Eine der ersten Lagerflächen (21) dient gleichzeitig als Referenzspur (11) für den Sensor (9).

### Bezugszeichenliste

- 1: Erste Einheit
- 2: Zweite Einheit
- 3: Lichtleiter
- 4: Erster Lichtkoppler
- 5: Zweiter Lichtkoppler
- 6: Drehachse der Drehung zwischen erster und zweiter Einheit
- 7: Lichtleitende Faser
- 8: Aktuator
- 9: Sensor
- 10: Steuereinheit
- 11: Referenzspur
- 12: Mittel zur hydrostatischen oder hydrodynamischen Lagerung
- 13: Absorber
- 14: Optischer Sender
- 15: Optischer Empfänger
- 20: zweite Lagerfläche
- 21: erste Lagerfläche
- 22: erste kapazitive Sensorfläche
- 23: zweite kapazitiver Sensorfläche
- 24: kapazitive Referenzfläche
- 25: erster Kontaktpunkt
- 26: zweiter Kontaktpunkt
- 27: Referenz-Kontaktpunkt
- 30: optisches System zur Strahlführung bzw. -Formung
- 31: Spiegel
- 32: Lichtstrahl
- 33: Anker
- 34: Permanentmagnet
- 35: Spule
- 36: Joch
- 40: optischer Wellenleiter
- 41: erste Koppelfläche
- 42: zweite Koppelfläche
- 43: erste Sensorfläche
- 44: zweite Sensorfläche
- 45: wellenlängenselektiver Spiegel
- 46: Lichtstrahl des Positionssensors
- 47: Positionssensor Sender/Empfänger
- 48: erster Lichtpfad
- 49: zweiter Lichtpfad
- 50: beschichtete Röhre
- 51: nachbearbeitete Röhre
- 52: Kleber
- 53: reflektierende Beschichtung
- 60: Gitter
- 61: optischen transparentes Material
- 62: erste Linse
- 63: zweite Linse
- 64: Fresnelstruktur

## Patentansprüche

1. Vorrichtung zur Übertragung modulierter optischer Signale zwischen einer ersten Einheit (1) und einer zweiten Einheit (2), wobei die erste Einheit gegenüber der zweiten Einheit drehbar gelagert ist, umfassend
- einen Lichtleiter (3) entlang einer Kreisbahn an der ersten Einheit,
- wenigstens einen mit dem Lichtleiter verbundenen ersten Lichtkoppler (4) zur Lichtein- bzw. Auskopplung in den Lichtleiter,
- wenigstens einen zweiten Lichtkoppler (5), welcher an der zweiten Einheit angeordnet ist, und gegenüber dem Lichtleiter (3) beweglich ist, zur Lichtein- bzw. Auskopplung in den Lichtleiter,
**dadurch gekennzeichnet, dass**
wenigstens ein zweiter Lichtkoppler (5) einen Aktuator (8), sowie hierzu wenigstens einen Sensor (9) und eine Steuereinheit (10) zur Justierung der Position des zweiten Lichtkopplers (5) aufweist, wobei wenigstens ein Sensor zur Ermittlung der Position des Lichtkopplers vorgesehen ist, dessen Signale an die Steuereinheit übermittelt werden, und die Steuereinheit entsprechende Steuersignale für den Aktuator (8) erzeugt, so dass die Position des Lichtkopplers in wenigstens einer Achse (6), bevorzugt in zwei Achsen senkrecht zur Tangente der Drehbewegung der beiden Einheiten relativ zum Lichtleiter (3) auf einem vorgegebenen Wert gehalten wird.

2. Vorrichtung nach dem Oberbegriff des Anspruchs 1,
**dadurch gekennzeichnet, dass**
Mittel zur hydrostatischen oder hydrodynamischen Lagerung (12) vorgesehen sind, derart dass wenigstens ein zweiter Lichtkoppler (5) mittels eines flüssigen oder gasförmigen Mediums bzw. einer auf einem flüssigen oder gasförmigen Medium, vorzugsweise Luft basierenden Lagerung gegenüber dem Lichtleiter in einer definierten Position in wenigstens einer Achse, bevorzugt in zwei Achsen senkrecht zur Tangente der Drehbewegung der beiden Einheiten gehalten wird.

3. Vorrichtung nach Anspruch 1,
**dadurch gekennzeichnet, dass**
wenigstens ein Sensor (9) als optischer Sensor ausgebildet ist.

4. Vorrichtung nach Anspruch 1,
**dadurch gekennzeichnet, dass**
wenigstens ein Sensor als kapazitiver oder induktiver Sensor, vorzugsweise als Differentialsensor ausgeführt ist.

5. Vorrichtung nach einem der Ansprüche 1, 3 oder 4,
**dadurch gekennzeichnet, dass**
parallel zum Lichtleiter wenigstens eine Referenzspur (11) vorgesehen ist, welche dem Positionssensor zur Ermittlung der Lage wenigstens eines zweiten Lichtkopplers dient.

6. Vorrichtung nach einem der Ansprüche 1, 3 bis 5,
**dadurch gekennzeichnet, dass**
der Aktuator (8) als elektromagnetische Aufhängung wenigstens eines zweiten Lichtkopplers ausgeführt ist.

7. Vorrichtung nach einem der vorhergehenden Ansprüche,
**dadurch gekennzeichnet, dass**
der Lichtleiter (3) in wenigstens zwei Segmente unterteilt ist und Mittel zur optischen Isolation (13) der Segmente untereinander vorgesehen sind, wobei die Längen der Segmente sowie die Ausbreitungsrichtungen des Lichts in den Segmenten und evtl. vorhandene Zuleitungen zu den Segmenten derart gestaltet sind, dass an den Grenzen zwischen zwei beliebigen Segmenten, in denen das gleiche Signal übertragen wird, das Modulationssignal in Laufzeit beziehungsweise Phase nur geringfügige Unterschiede aufweist, welche klein gegenüber einer Periodendauer des Modulationssignals sind.

8. Vorrichtung nach Anspruch 7,
**dadurch gekennzeichnet, dass**
Gruppen aus jeweils zwei benachbarten Segmenten vorgesehen sind, welche die gleiche Laufzeit und eine entgegengesetzte Ausbreitungsrichtung des Lichts aufweisen.

9. Vorrichtung nach einem der vorhergehenden Ansprüche,
**dadurch gekennzeichnet, dass**
wenigstens ein zweiter Lichtkoppler (5) eine lichtleitende Faser (7) umfasst, deren Ende gleichzeitig wenigstens eine Fläche (41, 42) aufweist, welche zur Ablenkung des in der lichtleitenden Faser geführten Lichtes in einem Winkel dient, dass das Licht durch den Lichtleiter geführt werden kann.

10. Vorrichtung nach Anspruch 9,
**dadurch gekennzeichnet, dass**
die lichtleitende Faser (7) näherungsweise senkrecht zur Tangente des Lichtleiters angeordnet ist und der Ablenkwinkel des austretenden Lichts näherungsweise tangential zum Lichtleiter verläuft.

11. Vorrichtung nach Anspruch 9 oder 10,
**dadurch gekennzeichnet, dass**
die lichtleitende Faser (7) gleichzeitig als optischer Sensor ausgebildet ist und hierzu vorzugsweise weitere Flächen (43, 44) zur Ablenkung der Sensorsignale in Richtung der Kontur des Lichtleiters aufweist.

12. Vorrichtung nach Anspruch 11,
**dadurch gekennzeichnet, dass**
wenigstens eine Fläche zur wellenlängenselektiven Ablenkung bzw. wellenlängenselektiven Filterung der Sensorsignale ausgebildet ist.

13. Vorrichtung nach einem der vorhergehenden Ansprüche,
**dadurch gekennzeichnet, dass**
wenigstens ein zweiter Lichtkoppler zur Verkopplung evaneszenter Felder vorgesehen ist.

14. Vorrichtung nach Anspruch 13,
**dadurch gekennzeichnet, dass**
wenigstens ein zweiter Lichtkoppler als Prisma ausgebildet ist.

15. Vorrichtung nach einem der vorhergehenden Ansprüche,
**dadurch gekennzeichnet, dass**
der Lichtleiter (3) wenigstens eine Grenzfläche mit vorzugsweise reflektierenden Eigenschaften aufweist.

16. Vorrichtung nach Anspruch 15,
**dadurch gekennzeichnet, dass**
der Lichtleiter (3) ein Material mit einer spiegelnden Oberfläche aufweist.

17. Vorrichtung nach Anspruch 15,
**dadurch gekennzeichnet, dass**
der Lichtleiter (3) ein Material mit einer verspiegelten Oberfläche umfasst.

18. Vorrichtung nach Anspruch 17,
**dadurch gekennzeichnet, dass**
die verspiegelte Oberfläche wahlweise eine reflektierende oder reflektierend beschichtete Folie bzw. eine metallische Schicht, welche beispielsweise galvanisch oder durch Vakuumbeschichtung aufgebracht ist, aufweist.

19. Vorrichtung nach einem der Ansprüche 16 bis 18,
**dadurch gekennzeichnet, dass**
die Oberfläche ein interferenzfähiges Mehrschichtsystem aufweist.

20. Vorrichtung nach einem der Ansprüche 16 bis 18,
**dadurch gekennzeichnet, dass**
die Oberfläche eine Schutzschicht aufweist.

21. Vorrichtung nach einem der vorhergehenden Ansprüche,
**dadurch gekennzeichnet, dass**
der Lichtleiter zur Führung einer Welle an der Grenzschicht zur umgebenden Luft ähnlich einer Filmwelle oder Oberflächenwelle ausgebildet ist.

22. Vorrichtung nach einem der vorhergehenden Ansprüche,
**dadurch gekennzeichnet, dass**
der Lichtleiter ein optisches Gitter (60) zur Lichtauskopplung aufweist.

23. Vorrichtung nach einem der vorhergehenden Ansprüche,
**dadurch gekennzeichnet, dass**
der Lichtleiter eine Fresnelstruktur zur Lichtauskopplung aufweist.

24. Vorrichtung nach einem der vorhergehenden Ansprüche,
**dadurch gekennzeichnet, dass**
wahlweise wenigstens ein optischer Sender bzw. wenigstens ein optischer Empfänger gleichzeitig als Lichtkoppler ausgebildet ist.

25. Vorrichtung nach einem der vorhergehenden Ansprüche,
**dadurch gekennzeichnet, dass**
der Lichtleiter (3) eine an der Oberfläche beschichtete Faser umfasst.

26. Vorrichtung nach einem der vorhergehenden Ansprüche,
**dadurch gekennzeichnet, dass**
der Lichtleiter (3) eine an der Außenseite oder Innenseite beschichtete Röhre (50) umfasst.

27. Vorrichtung nach einem der vorhergehenden Ansprüche,
**dadurch gekennzeichnet, dass**
der Lichtleiter (3) Sammeleigenschaften in mindestens einer Ebene aufweist.

28. Vorrichtung nach einem der vorhergehenden Ansprüche,
**dadurch gekennzeichnet, dass**
Mittel zur gleichzeitigen Übertragung mehrerer Kanäle auf unterschiedlichen optischen Wellenlängen vorgesehen sind.

29. Vorrichtung nach Anspruch 28,
**dadurch gekennzeichnet, dass**
mehrere erste Lichtkoppler (4), welche zur ein- bzw. Auskopplung jeweils unterschiedlicher Wellenlängen vorgesehen sind, an unterschiedlichen Positionen des Lichtleiters angeordnet sind.

30. Vorrichtung nach Anspruch 28 oder 29,
**dadurch gekennzeichnet, dass**
mindestens ein Mittel zur optischen Isolation (13) Wellenlängenselektiv ausgebildet ist.

31. Vorrichtung nach einem der Ansprüche 28 bis
30,
**dadurch gekennzeichnet, dass**
mehrere Mittel zur optischen Isolation (13) Wellenlängenselektiv ausgebildet sind und an den entsprechenden Positionen zu Isolation der Segmente der Lichtkoppler für die entsprechende Wellenlänge angeordnet sind.

32. Vorrichtung nach einem der vorhergehenden Ansprüche,
**dadurch gekennzeichnet, dass**
wenigstens ein optischer Sender (14) vorgesehen ist, welcher polarisiertes Licht aussendet, und weiterhin der optische Pfad derart ausgebildet ist, dass das Licht in einer bevorzugten Polarisation, vorzugsweise senkrecht zum Lichtleiter polarisiert übertragen wird.

33. Vorrichtung nach einem der vorhergehenden Ansprüche,
**dadurch gekennzeichnet, dass**
wenigstens ein polarisationsselektiver optischer Empfänger (15) vorgesehen ist, welcher Licht einer vorgegebenen Polarisation empfängt.

34. Vorrichtung nach einem der vorhergehenden Ansprüche,
**dadurch gekennzeichnet, dass**
mehrere optischer Sender (14) vorgesehen sind, welcher polarisiertes Licht aussenden und mehrere polarisationsselektive optische Empfänger (15) vorgesehen sind, wobei zur gleichzeitigen Übertragung mehrerer Kanäle mehrere Gruppen aus aufeinander abgestimmten optischen Sendern und Empfängern gebildet sind.

35. Vorrichtung nach einem der vorhergehenden Ansprüche,
**dadurch gekennzeichnet, dass**
wenigstens ein optischer Sender (14) vorgesehen ist, welcher polarisiertes Licht aussendet und wenigstens ein polarisationsselektive optischre Empfänger (15) vorgesehen sind, wobei wahlweise im optischen Sender selbst bzw. im Signalpfad zur Codierung eines zu übertragenen Signals die Polarisation moduliert wird und der optische Empfänger Mittel zur Umsetzung der Polarisationsmodulation in eine Amplitudenmodulation aufweist.

## Claims

1. Device for transmitting modulated optical signals between a first unit (1) and a second unit (2), the first unit being supported for rotary movement relative to the second unit, comprising:
- a light guide (3) along a circular track on the first unit;
- at least one first light coupler (4) connected to the light guide for coupling light into or out of the light guide;
- at least one second light coupler (5) disposed on the second unit and movable relative to the light guide (3), for coupling light into or out of the light guide;
**characterized in that**
at least one second light coupler (5) has an actuator (8) and associated therewith at least one sensor (9) and a control unit (10) for adjusting the position of the second light coupler (5), at least one sensor being provided for determining the position of the light coupler, the signals of which are communicated to the control unit, and that the control unit generates corresponding control signals for the actuator (8), so that the position of the light coupler along at least one axis (6) perpendicular to the tangent of the rotary movement of the two units relative to the light guide (3) is maintained at a given value.

2. Device according to the preamble of claim 1,
**characterized in that**
hydrostatic or hydrodynamic bearing means (12) are provided to maintain at least one second light coupler (5) in a defined position relative to the light guide along at least one axis, preferably along two axes perpendicular to the tangent of the rotary movement of the two units, by means of a liquid or gaseous medium, or a bearing means based on a liquid or gaseous medium, preferably air.

3. Device according to claim 1,
**characterized in that**
at least one sensor (9) is designed to be an optical sensor.

4. Device according to claim 1,
**characterized in that**
at least one sensor is designed to be a capacitive or an inductive sensor, preferably a differential sensor.

5. Device according to any one of claims 1, 3 or 4,
**characterized in that**
at least one reference track (11) is provided to be parallel to the light guide, for use by the position sensor in determining the position of at least one second light coupler.

6. Device according to any one of claims 1, 3 to 5,
**characterized in that**
the actuator (8) is designed to be an electromagnetic suspension means for at least one second light coupler.

7. Device according to any one of the preceding claims,
**characterized in that**
the light guide (3) is divided into at least two segments, and means are provided for optical isolation of the segments from each other, the lengths of the segments, and also the directions of propagation of the light in the segments and any supply leads to the segments, being designed so that the modulation signal at the boundaries between any two segments in which the same signal is transmitted, has only minor differences of transit time or phase that are small in comparison with the duration of a period of the modulation signal.

8. Device according to claim 7,
**characterized in that**
groups which each consist of two adjacent segments having the same transit time and an opposite direction of propagation of light are provided.

9. Device according to any one of the preceding claims,
**characterized in that**
at least one second light coupler (8) comprises a light guiding fiber (7), an end of which simultaneously has at least one face (41, 42) serving to deflect the light guided in the light guiding fiber at an angle, so that the light can be guided through the fiber.

10. Device according to claim 9,
**characterized in that**
the light guiding fiber (7) is disposed to be approximately perpendicular to the tangent to the light guide, and the angle of deflection of the issuing light extends approximately tangentially to the light guide.

11. Device according to claim 9 or 10,
**characterized in that**
the light guiding fiber (7) is designed to be simultaneously an optical sensor, and preferably comprises further faces (43, 44) for deflecting sensor signals in the direction of the contour of the light guide.

12. Device according to claim 11,
**characterized in that**
at least one face is adapted to perform a wavelength-selective deflection or wavelength-selective filtering of the sensor signals.

13. Device according to any one of the preceding claims,
**characterized in that**
at least one second light coupler is provided for mutually coupling evanescent fields.

14. Device according to claim 13,
**characterized in that**
at least one second light coupler is designed to be a prism.

15. Device according to any one of the preceding claims,
**characterized in that**
the light guide (3) comprises at least one boundary surface preferably having reflective properties.

16. Device according to claim 15,
**characterized in that**
the light guide (3) comprises a material having a mirror surface.

17. Device according to claim 15,
**characterized in that**
the light guide (3) comprises a material having a surface that has been rendered reflective.

18. Device according to claim 17,
**characterized in that**
the surface that has been rendered reflective optionally comprises a reflective or reflectively coated foil, or a metallic layer that has been deposited, for example by galvanization or vacuum deposition.

19. Device according to any one of claims 16 to 18,
**characterized in that**
the surface comprises a multiple layer system capable of interference.

20. Device according to any one of claims 16 to 18,
**characterized in that**
the surface is provided with a protective layer.

21. Device according to any one of the preceding claims,
**characterized in that**
the light guide is designed to guide a wave along the boundary layer to surrounding air in a similar way to a film wave or surface wave.

22. Device according to any one of the preceding claims,
**characterized in that**
the light guide comprises an optical grating (60) for coupling out light.

23. Device according to any one of the preceding claims,
**characterized in that**
the light guide comprises a Fresnel structure for coupling out light.

24. Device according to any one of the preceding claims,
**characterized in that**
optionally at least one optical transmitter or at least one optical receiver is designed to be simultaneously a light coupler.

25. Device according to any one of the preceding claims,
**characterized in that**
the light guide (3) comprises a surface-coated fiber.

26. Device according to any one of the preceding claims,
**characterized in that**
the light guide (3) comprises a tube (50) coated on the outside or inside.

27. Device according to any one of the preceding claims,
**characterized in that**
the light guide (3) has collecting properties in at least one plane.

28. Device according to any one of the preceding claims,
**characterized in that**
means are provided for a simultaneous transmission of a plurality of channels at different optical wavelengths.

29. Device according to claim 28,
**characterized in that**
a plurality of first light couplers (4), each provided for coupling in or out different wavelengths, are disposed at different positions of the light guide.

30. Device according to claim 28 or 29,
**characterized in that**
at least one means for optical isolation (13) is designed to be wavelength selective.

31. Device according to any one of claims 28 to 30,
**characterized in that**
a plurality of means for optical isolation (13) are designed to be wavelength selective, and are disposed at appropriate positions for isolating the segments of the light couplers for the respective wavelengths.

32. Device according to any one of the preceding claims,
**characterized in that**
at least one optical transmitter (14) is provided for emitting polarized light, and furthermore, the optical path is designed so that the light is transmitted with a preferred polarization, preferably perpendicularly to the light guide.

33. Device according to any one of the preceding claims,
**characterized in that**
at least one polarization-selective optical receiver (15) is provided for receiving light having a predetermined polarization.

34. Device according to any one of the preceding claims,
**characterized in that**
a plurality of optical transmitters (14) is provided for emitting polarized light, and a plurality of polarization-selective optical receivers (15) is provided, a plurality of groups consisting of optical transmitters and receivers tuned to each other being formed for simultaneous transmission of a plurality of channels.

35. Device according to any one of the preceding claims,
**characterized in that**
at least one optical transmitter (14) is provided for emitting polarized light, and at least one polarization-selective optical receiver (15) is provided, polarization of the polarized light being modulated optionally in the optical transmitter itself or in the signal path for coding a signal to be transmitted, and the optical receiver comprises means for converting the polarization modulation to an amplitude modulation.

## Revendications

1. Dispositif à transmettre des signaux optiques modulés entre une première unité (1) et une deuxième unité (2), à ladite première unité étant logée pour une rotation relative à ladite deuxième unité, comprenant
- un guide d'ondes optiques (3) le long d'une trajectoire circulaire à ladite première unité,
- au moins un premier optocoupleur (4) relié audit guide d'ondes optiques à injecter de la lumière dans ledit guide d'ondes optiques ou la sortir en dehors dudit guide,
- au moins un deuxième optocoupleur (5) disposé à ladite deuxième unité et mobile relativement audit guide d'ondes optiques (3) à injecter de la lumière dans ledit guide d'ondes optiques ou la sortir en dehors dudit guide,
**caractérisé en ce**
**qu'**au moins un deuxième optocoupleur (5) comprend un acteur (8) ainsi qu'au moins un détecteur affecté (9) et une unité de commande (10) à ajuster la position dudit deuxième optocoupleur (5), dans lequel au moins un détecteur est disposé afin de détecter la position de l'optocoupleur dont les signaux sont transmis à l'unité de commande, et en ce que ladite unité de commande engendre des signaux de commande correspondants pour ledit acteur (8) d'une telle manière, que la position dudit optocoupleur soit maintenue en au moins un axe (6), de préférence en deux axes orthogonaux à la tangente du mouvement de rotation des deux unités relativement audit guide d'ondes optiques (3), à une valeur prédéterminée.

2. Dispositif selon le préambule de la revendication 1,
**caractérisé en ce**
**que** des moyens sont disposés pour le logement hydrostatique ou hydrodynamique (12) d'une telle façon, qu'au moins un deuxième optocoupleur (5) soit tenu, moyennant un milieu liquide ou gazeux ou respectivement par un logement à la base d'un milieu liquide ou gazeux, de préférence de l'air, relativement audit guide d'ondes optiques, en une position définie en essentiellement un axe, de préférence en deux axes orthogonaux sur la tangente du mouvement de rotation des deux unités.

3. Dispositif selon la revendication 1,
**caractérisé en ce**
**qu'**au moins un détecteur (9) est configuré sous forme d'un détecteur optique.

4. Dispositif selon la revendication 1,
**caractérisé en ce**
**qu'**au moins un détecteur est réalisé sous forme d'un détecteur capacitif ou inductif, de préférence en tant qu'un détecteur différentiel.

5. Dispositif selon une quelconque des revendications 1, 3 ou 4,
**caractérisé en ce**
**qu'**au moins une piste de référence (11) est formée en parallèle audit guide d'ondes optique, qui est utilisée par ledit détecteur de position afin de détecteur la position d'au moins un deuxième optocoupleur.

6. Dispositif selon une quelconque des revendications 1, 3 à 5,
**caractérisé en ce**
**que** ledit acteur (8) est réalisé sous forme d'une suspension électromagnétique d'un deuxième optocoupleur.

7. Dispositif selon une quelconque des revendications précédentes,
**caractérisé en ce**
**que** ledit guide d'ondes optiques (3) est divisé en au moins deux segments et que des moyens sont disposés pour l'isolation optique (13) des segments l'un de l'autre, aux longueurs desdits segments ainsi que les directions de propagation de la lumière dans lesdits segments et des lignes d'alimentation éventuellement formés, qui mènent auxdits segments, sont conçus d'une telle manière, qu'aux limites entre deux segments quelconques, dans lesquels le même signal est transmis, le signal de modulation ne présente que d es différences minime en temps de transit ou respectivement en phase, qui sont petites devant une durée de la période du signal de modulation.

8. Dispositif selon la revendication 7,
**caractérisé en ce**
**que** des groupes sont formées, dont chacune est composée de deux segments adjacents respectifs, qui présentent le même temps de transit et une direction de propagation opposée de la lumière.

9. Dispositif selon une quelconque des revendications précédentes,
**caractérisé en ce**
**qu'**au moins un deuxième optocoupleur (5) comprend une fibre optique (7), dont l'extrémité présente, en même temps, au moins une surface (41, 42) servant à dévier la lumière guidée dans ladite fibre optique à un tel angle que la lumière puisse être guidée à travers le guide d'ondes optiques.

10. Dispositif selon la revendication 9,
**caractérisé en ce**
**que** la fibre optique (7) est disposée en une étendue approximativement orthogonale sur la tangente dudit guide d'ondes optiques, et que l'angle de déviation de la lumière émergente s'étend approximativement en direction tangentielle relativement audit guide d'ondes optiques.

11. Dispositif selon la revendication 9 ou 10,
**caractérisé en ce**
**que** ladite fibre optique (7) est réalisée, en même temps, en tant qu'un détecteur optique et présente, à cette fin, de préférence des autres surfaces (43, 44) à dévier les signaux de détection en la direction du contour dudit guide d'ondes optiques.

12. Dispositif selon la revendication 11,
**caractérisé en ce**
**qu'**au moins une surface est configurée pour la déviation sélective par longueurs d'ondes des signaux de détection ou respectivement pour le filtrage sélectif par longueurs d'ondes des signaux.

13. Dispositif selon une quelconque des revendications précédentes,
**caractérisé en ce**
**qu'**au moins un deuxième optocoupleur est disposé pour l'injection des champs évanescents.

14. Dispositif selon la revendication 13,
**caractérisé en ce**
**qu'**au moins un deuxième optocoupleur est configuré sous forme d'un prisme.

15. Dispositif selon une quelconque des revendications précédentes,
**caractérisé en ce**
**que** ledit guide d'ondes optiques (3) comprend au moins une surface limite aux propriétés réfléchissantes de préférence.

16. Dispositif selon la revendication 15,
**caractérisé en ce**
**que** ledit guide d'ondes optiques (3) comprend un matériau à une surface spéculaire.

17. Dispositif selon la revendication 15,
**caractérisé en ce**
**que** ledit guide d'ondes optiques (3) comprend un matériau à une surface à une couche réfléchissante déposée.

18. Dispositif selon la revendication 17,
**caractérisé en ce**
**que** ladite surface à une couche réfléchissante déposée comprend, de manière optionnelle, une feuille réfléchissante ou une feuille à revêtement réfléchissant ou respectivement une couche métallique qui est déposée, par exemple, par un processus galvanique ou par un processus de métallisation sous vide.

19. Dispositif selon une quelconque des revendications 16 à 18,
**caractérisé en ce**
**que** la surface comprend un système à plusieurs couches, qui est capable d'interférer.

20. Dispositif selon une quelconque des revendications 16 à 18,
**caractérisé en ce**
**que** la surface comprend une couche protectrice.

21. Dispositif selon une quelconque des revendications précédentes,
**caractérisé en ce**
**que** ledit guide d'ondes optiques est conçu de façon à guider une onde à ladite couche limite vers l'air l'entourant d'une manière similaire à une onde de feuille ou une onde superficielle.

22. Dispositif selon une quelconque des revendications précédentes,
**caractérisé en ce**
**que** ledit guide d'ondes optiques comprend un réseau optique (60) pour la sortie de la lumière.

23. Dispositif selon une quelconque des revendications précédentes,
**caractérisé en ce**
**que** ledit guide d'ondes optiques comprend une structure de Fresnel pour la sortie de la lumière.

24. Dispositif selon une quelconque des revendications précédentes,
**caractérisé en ce**
**qu'**en option, au moins un émetteur optique ou respectivement au moins un récepteur optique est réalisé, en même temps, en tant qu'un optocoupleur.

25. Dispositif selon une quelconque des revendications précédentes,
**caractérisé en ce**
**que** ledit guide d'ondes optiques (3) comprend une fibre revêtue à la surface.

26. Dispositif selon une quelconque des revendications précédentes,
**caractérisé en ce**
**que** ledit guide d'ondes optiques (3) comprend un tube (50) revêtu à sa surface extérieure ou inférisure.

27. Dispositif selon une quelconque des revendications précédentes,
**caractérisé en ce**
**que** ledit guide d'ondes optiques (3) présente des propriétés de collection en au moins un plan.

28. Dispositif selon une quelconque des revendications précédentes,
**caractérisé en ce**
**que** des moyens sont formés pour la transmission simultanée de plusieurs voies aux longueurs différentes des ondes optiques.

29. Dispositif selon la revendication 28,
**caractérisé en ce**
**que** plusieurs premiers optocoupleurs (4) sont disposés aux positions différentes dudit guide d'ondes optiques, qui servent à l'injection ou respectivement à la sortie des longueurs d'ondes différentes respectives.

30. Dispositif selon la revendication 28 ou 29,
**caractérisé en ce**
**qu'**au moins un moyen est réalisé d'une manière sélective par longueurs d'ondes pour l'isolation optique (13).

31. Dispositif selon une quelconque des revendications 28 à 30,
**caractérisé en ce**
**que** plusieurs moyens sont réalisés d'une manière sélective par longueurs d'ondes pour l'isolation optique (13), en étant disposés aux positions correspondantes pour l'isolation des segments desdits optocoupleurs pour la longueur d'onde correspondante.

32. Dispositif selon une quelconque des revendications précédentes,
**caractérisé en ce**
**qu'**au moins un émetteur optique (14) est disposé, qui émet de la lumière polarisée, et en ce qu'au plus la trajectoire optique est configurée d'une telle manière, que la lumière soit transmise à une polarisation préférée, de préférence à une polarisation en une direction orthogonale sur ledit guide d'ondes optiques.

33. Dispositif selon une quelconque des revendications précédentes,
**caractérisé en ce**
**qu'**au moins un récepteur optique (15) sélectif par polarisation est disposé, qui reçoit de la lumière à une polarisation prédéterminée.

34. Dispositif selon une quelconque des revendications précédentes,
**caractérisé en ce**
**que** plusieurs émetteurs optiques (14), qui émettent de la lumière polarisée, et plusieurs récepteurs (15) sélectif par polarisation sont disposés, à plusieurs groupes d'émetteurs et récepteurs optiques, l'un accordé à l'autre, étant formées pour la transmission simultanée de plusieurs voies.

35. Dispositif selon une quelconque des revendications précédentes,
**caractérisé en ce**
**qu'**au moins un émetteur (14) optique, qui émet de la lumière polarisée, et au moins un récepteur optique (15) sélectif par polarisation sont disposés, à la polarisation étant modulée, de manière optionnelle, dans ledit émetteur optique en soi ou respectivement dans la voie des signaux pour le codage d'un signal à transmettre, et en ce que ledit récepteur optique comprend des moyens à transformer la modulation de polarisation en une modulation d'amplitude.
